# EUROPÄISCHE PATENTSCHRIFT

(11) **EP 3 891 021 B1**
(45) Veröffentlichungstag und Bekanntmachung des Hinweises auf die Patenterteilung: **11.01.2023**
(21) Anmeldenummer: 19805174.0
(22) Anmeldetag: 12.11.2019
(51) Int. Cl.: B60R 16/03, B60R 16/02

(54) **HERSTELLUNGSVERFAHREN FÜR EIN FAHRZEUGBORDNETZ EINES FAHRZEUGS SOWIE FAHRZEUGBORDNETZ**
PRODUCTION METHOD FOR A VEHICLE NETWORK OF A VEHICLE, AND VEHICLE NETWORK
PROCÉDÉ DE FABRICATION POUR UN RÉSEAU DE BORD D'UN VÉHICULE AINSI QUE RÉSEAU DE BORD DE VÉHICULE

(30) Priorität: 06.12.2018 DE 102018131199
(43) Veröffentlichungstag der Anmeldung: 13.10.2021
(73) Patentinhaber: Lisa Dräxlmaier GmbH, 84137 Vilsbiburg (DE)
(72) Erfinder: WORTBERG, Michael, 84405 Dorfen (DE); EBERL, Dominik, 84137 Vilsbiburg (DE)
(86) Internationale Anmeldenummer: PCT/EP2019/080914
(87) Internationale Veröffentlichungsnummer: WO 2020/114726

(56) Entgegenhaltungen:
- EP-A2- 0 475 406
- WO-A1-01/49532
- DE-A1-102014 222 878
- GB-A- 2 167 885
- US-A1- 2004 227 402

## Beschreibung

### Technisches Gebiet

Die vorliegende Erfindung betrifft ein Fahrzeugbordnetzsystem für Fahrzeuge einerseits und die automatisiertes Herstellungsverfahren zur Fertigung des physischen Leitungssatzes andererseits. Vor dem Hintergrund immer größer werdender Komplexität der Bordnetzsysteme und steigender Anforderungen an das Bordnetz, wie z.B. funktionale Sicherheitsanforderungen, ist die bisherige manuelle Fertigung von Leitungssätzen mit Risiken behaftet bezüglich Qualität, Robustheit und Komplexitätsbeherrschung.

### Stand der Technik

Die vorliegende Erfindung wird im Folgenden hauptsächlich in Verbindung mit Schaltelementen für Fahrzeugbordnetze beschrieben. Die Erfindung kann aber in jeder Anwendung genutzt werden, in welcher elektrische Lasten geschaltet werden.

Aus der Praxis ist bekannt, dass elektrische beziehungsweise elektronische Komponenten eines Fahrzeugs, wie etwa elektrische Stromquellen, Schaltglieder, elektrische Verbraucher sowie Steuergeräte, durch einen funktionsbasiert oder kundenspezifisch konfigurierten, elektrischen Leitungssatz elektrisch leitfähig miteinander verbunden beziehungsweise miteinander vernetzt sind. Auf diese Weise wird ein Bordnetz des Fahrzeugs ausgebildet, in welchem Informationen zwischen den verschiedenen Bordnetzkomponenten ausgetauscht oder diese mit elektrischer Energie versorgt werden. Ein solcher Leitungssatz, der auch als Kabelbaum bezeichnet werden kann, besteht im Wesentlichen aus elektrischen Leitern beziehungsweise elektrischen Leitungen, daran angebrachten elektrischen Steckverbindern und dergleichen.

Die Konfiguration eines solchen Leitungssatzes erfolgt häufig unter Zuhilfenahme einer Montagevorrichtung in Form eines so genannten Verlegebretts, das hierfür eine Vielzahl von entsprechend positionierten Nägeln oder Stiften aufweist. Auf dem Verlegebrett werden die einzelnen elektrischen Leiter beziehungsweise elektrischen Leitungen des herzustellenden Leitungssatzes räumlich entsprechend den funktionalen und/oder geometrischen Anforderungen an den Leitungssatz geführt beziehungsweise angeordnet.

Das Bordnetz eines Fahrzeugs verbindet einerseits eine Energiequelle über Verteiler und Unterverteiler mit den verschiedenen Lasten oder Verbrauchern im Kraftfahrzeug. So kann man unter den Komponenten des Bordnetzes Stromverteiler wie Verteiler und Unterverteiler sowie Lasten, aber auch diese verbindende Leitungen verstehen. Dabei können die Leitungen über Steckverbindungen mit Schnittstellen der Verteiler, Unterverteiler oder Lasten verbunden sein.

In Kraftfahrzeugen werden immer mehr elektronische Schaltungen im Bordnetz benutzt. So sind immer mehr elektronische Schaltungen nutzende (vernetzte) Steuergeräte in einem Kraftfahrzeug verbaut, die untereinander Schaltinformationen oder Schaltbefehle austauschen oder Lasten schalten. Durch die Entwicklung in Richtung autonomes Fahren gewinnt dabei das Thema funktionale Sicherheit (FuSi) immer mehr an Bedeutung. Dabei wird sowohl bei den Steuergeräten wie auch bei den angeschlossenen Lasten zwischen einem quasi konventionellem Teil und einem hochverfügbaren Sicherheitsteil unterschieden.

Es existieren in heutigen Fahrzeugen bereits sicherheitsrelevante Funktionen, wie z.B. das automatisierte Lenken der Einparkfunktion. Diese Funktionen müssen Fail-Save ausgelegt werden, das heißt, dass bei Erkennen eines Fehlers der sichere Zustand "aus" eingenommen wird und der Fahrer über Anzeigeinstrumente benachrichtigt wird. Systeme des autonomen Fahrens hingegen müssen Fail-Operational mit einem Fehler-Zustandsübergang in den sicheren Zustand "an" ausgelegt werden. Der Ausfall der Versorgung mit Energie (Versorgungsleitung) oder Kommunikation (Busleitung) für diese Funktion kann zu einer direkten Gefährdung von Menschen führen. Dieser sichere Zustand "an" muss solange gehalten werden, bis das Fahrzeug an einem sicheren Ort angehalten werden kann oder bis der Fahrer die Kontrolle übernehmen kann. Da der Sichere Zustand "an" ist, wird die Versorgung relevant für das Einhalten des Sicherheitsziels.

Die erhöhten Anforderungen an die Fehlerfreiheit des Leitungssatzes steht im Kontrast zur immer höheren Komplexität des Leitungssatzes. Die Komplexität ist Ursache für Fehler in der Entwicklung und in der Fertigung des Leitungssatzes. Grundsätzlich hat der Leitungssatz drei Aufgaben zu erfüllen: 1. Elektrische Verbindungen für die Energieversorgung aus der Batterie und/oder Generator zur Verfügung stellen. 2. Elektrische Verbindung für die Kommunikation bereitstellen und 3. Eine Entflechtung der Verbindungen im Bordnetzsystem vorzunehmen. Es ist Punkt 3. die Entflechtung, also die tiefe Verknüpfung der Verbindungsbeziehungen der Bordnetzteilnehmer, die die Komplexität des Leitungssatzes ausmacht.

Die tiefe Verknüpfung der Bordnetzteilnehmer kann exemplarisch so dargestellt werden: Ein zentrales Steuergerät hat einen großen Stecker mit >50 Kontakten. Die Leitungen, die von diesem Stecker ausgehen, enden bei 20 unterschiedlichen Steckern anderer Bordnetzteilnehmer (Steuergeräte, Sensoren Aktuatoren). Die Steckern der andern Bordnetzteilnehmer beinhalten wiederum Leitungen, die zu weiteren Bordnetzteilnehmern führen usw.. Es liegen also fast keine eins zu eins Beziehungen von Steckern und Gegensteckern vor. Statt dessen ist fast jeder Stecker gemischt bestückt mit Leitungen, die zu unterschiedlichen anderen Bordnetzteilnehmern verbinden.

Um die Komplexität in der Fertigung des Leitungssatzes zu beherrschen, wird der Leitungssatz in Module zerlegt und diese in einem sogenannten Modulbau vorgefertigt. Module werden nach der Zugehörigkeit zu Funktionen ausgewählt, oftmals wird auch nach einem neuen Ansatz der Zonalität versucht eine topologische Zugehörigkeit nach Topologieebenen zusammenzufassen. Diese Module weisen aber viele offenen Enden und unvollständig bestückte Stecker auf, weil wegen der tiefen Verknüpfung da im Allgemeinen kein Teilstück des Leitungssatzes als komplettes Modul herausgelöst werden kann. Im sogenannten Zusbau (Zusammenbau) werden die einzelnen Module auf einem Baubrett zusammengelegt. Die Verknüpfungen zwischen den Modulen müssen hier in Form von manuellen Nachsteckungen in die noch unvollständig bestückten Stecker vorgenommen werden. Dieses manuelle Nachstecken ist oftmals Quelle von Fehlern.

Die Leitungssatzfertigung ist sehr zeitaufwendig und benötigt viel Fläche. Die verschiedenen Module werden auf unterschiedlichen Baubrettern gefertigt. Dann müssen sie von diesen abgenommen und eingelagert werden. Aus dem Lager werden sie entsprechend der Perlenkette der Fertigung kundenspezifischer Kabelsätze abgerufen und auf einem Zusbau-Baubrett zu einem kompletten Leitungssatz zusammengelegt. Dabei muss über manuelle Nachsteckungen die Verbindung zwischen den Modulen hergestellt werden. Nach Vervollständigung des Kabelsatzes über Wickeln und anbringen von Halteteilen wird der komplette Kabelsatz vom Zusbau Baubrett abgenommen. Er muss danach in eine raufwendigen Prozedur auf einen Endtester gebracht werden. Auf diesem müssen alle Stecker über Nadeladapter kontaktiert werden. Mit Durchgangstests wird hier herausgefunden, ob Fehler bei den manuellen Steckung aufgetreten sind.

WO01/49532A1 offenbart ein Stromverteilungssystem für ein Fahrzeug. DE19852560A1 offenbart ein Verfahren zur Bestimmung einer Leitungssatz-Architektur für die Verknüpfung wenigstens zweier elektrischer Komponenten.

### Beschreibung der Erfindung

Eine Aufgabe der Erfindung ist es daher, unter Einsatz konstruktiv möglichst einfacher Mittel ein Fahrzeugbordnetz zu entwerfen, welches mit möglichst geringem manuellen Aufwand fertigbar ist

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben. Insbesondere können die unabhängigen Ansprüche einer Anspruchskategorie auch analog zu den abhängigen Ansprüchen einer anderen Anspruchskategorie weitergebildet sein.

Da die beschriebene tiefe Verflechtung der Verbindungen im Kabelsatz Ursache der Komplexität ist, wird diese für die erfinderische Lösung theoretisch betrachtet und basierend auf der theoretischen Betrachtung einer Komplexitätsreduktion zugeführt. Die Graphentheorie behandelt die Modellierung von Verflechtungen in Netzwerken und ist in diesem Zusammenhang hierzu besonders geeignet.

Die Stecker, bzw. Kontaktelemente oder Interfaces, in einem Leitungssatz seien die Knoten eines Graphen. Die Leitungsverbindungen mit mindestens einer Leitung von jeweils einem Stecker zu anderen Stecker seien die Kanten des Graphen. Für den konventionellen automotive Leitungssatz erhält man somit einen im allgemeinen einen zusammenhängenden, nicht flachen, nicht regulären Graphen mit mehreren hundert Kanten und Knoten. Von der Adjazenzmatrix des Graphen des konventionellen Leitungssatzes, welche die Verbindungsbeziehungen der Knoten untereinander beschreibt, kann der Eigenvektor bestimmt werden. Dieser ist für den konventionellen Leitungssatz unsymmetrisch und besitzt keine Nullstellen. Dies ist ein Indiz dafür, dass der Graph unregelmäßig und mehrschichtig (nicht flach) ist und nicht ohne weiteres in Teilgraphen zerlegt werden kann.

Die theoretische Betrachtung geht davon aus, dass das Bordnetz in Topologieebenen unterteilt werden kann. Kriterium für die Zugehörigkeit von Bordnetzteilnehmern zu Topologieebenen können funktionale Aspekte sein (z.B. Zugehörigkeit zu kundenwählbaren Ausstattungen) als auch räumlich/topologische Gesichtspunkte. Ein weiterer wichtiger Aspekt für die Abgrenzung von Topologieebenen ist die funktionale Sicherheit. Verbindungen mit den Anforderungen der funktionalen Sicherheit können so in eigenen Topologieebenen zusammengefasst und gekapselt werden. Unter einem Bordnetzteilnehmer können allgemein Lasten, Sensoren und/oder Aktoren verstanden werden.

Geht man in einer Modelüberlegung davon aus, dass ein Bordnetzsystem in mindestens zwei Topologieebenen aufgeteilt werden kann, wird zur Komplexitätsreduzierung der bisher zusammenhängenden, nicht flachen, nicht regulären Graph des konventionellen Bordnetzes in mindestens zwei entsprechend der Graphentheorie partite Teilnetze (Partitionen) aufgeteilt. So entsteht ein multi-partiter Graph oder auch k-partiter Graph. Dafür wird bevorzugt dem Stromverteiler oder auch einem anderen Bordnetzteilnehmer ein Matrix-Koppler hinzugefügt, welche die Entflechtungsuafgabe übernimmt.

Ein multi-partiter Graph oder k-partiter Graph ist in der Graphentheorie ein einfacher Graph, dessen Knotenmenge in k disjunkte Teilmengen zerfällt, sodass die Knoten jeder dieser Teilmengen untereinander nicht benachbart sind. Für k = 2 heißen diese Graphen bipartite Graphen. Eine k-Partition eines Graphen ist eine Zerlegung der Knotenmenge in k disjunkte Teilmengen, sodass keine adjazenten Knoten in der gleichen Menge liegen. Eine solche k-Partition ist nicht eindeutig. Es ist durchaus möglich, dass es mehrere k-Partitionen gibt, die diese Eigenschaft erfüllen. Ein Graph heißt nun k-partit, falls er eine k-Partition besitzt. Man nennt den Graphen vollständig k-partit, falls außerdem jeder Knoten mit allen Knoten aller anderen k-Partitionen verbunden ist.

Ein bipartiter Graph, auch als paarer Graph bezeichnet, ist ein mathematisches Modell für Beziehungen zwischen den Elementen zweier Mengen. Ein einfacher Graph heißt bipartit oder paar, falls sich seine Knoten in zwei disjunkte Teilmengen aufteilen lassen, sodass zwischen den Knoten innerhalb beider Teilmengen keine Kanten verlaufen. Vereinfacht dargestellt, ist ein bipartiter Graph ein Graph, in dem zwei Gruppen von Knoten existieren, innerhalb derer keine Knoten miteinander verbunden sind. Der Graph heißt vollständig bipartit, falls eine Bipartition existiert, sodass jeder Knoten aus der ersten disjunkten Teilmenge mit jedem Knoten aus der zweiten disjunkten Teilmenge verbunden ist. Ein vollständig bipartiter Graph, bei dem die Anzahl der Knoten einer der beiden disjunkten Teilmengen gleich eins ist, heißt Sterngraph. Der bipartite Graph eignet sich zur Untersuchung von Zuordnungsproblemen. Des Weiteren lassen sich für bipartite Graphen viele Grapheneigenschaften mit deutlich weniger Aufwand berechnen, als dies im allgemeinen Fall möglich ist.

Eine Adjazenzmatrix eines Graphen, auch als Verbindungsmatrix oder Nachbarschaftsmatrix bezeichnet, ist eine Matrix, die speichert, welche Knoten des Graphen durch eine Kante verbunden sind. Sie besitzt für jeden Knoten eine Zeile und eine Spalte, woraus sich für n Knoten eine n×n-Matrix ergibt. Ein Eintrag in der i-ten Zeile und j-ten Spalte gibt hierbei an, ob eine Kante von dem i-ten zu dem j-ten Knoten führt. Steht an dieser Stelle eine 0, ist keine Kante vorhanden - eine 1 gibt an, dass eine Kante existiert. Die Repräsentation eines Graphen als Matrix erlaubt den Einsatz von Methoden der linearen Algebra. Die Anwendung und Untersuchung solcher Methoden bildet ein zentrales Thema in der spektralen Graphentheorie. Es bildet damit eine Schnittstelle zwischen Graphentheorie und linearer Algebra.

Der Matrix-Koppler übernimmt die Entflechtungsaufgabe und die erfinderische Gestalt des Bordnetzes hat somit die bei einer Umsetzung eines bipartiten Graphen folgende Ausprägung:
- Sind p1, p2...pn die Knoten einer Bipartition, die den verbundenen Bordnetzteilnehmern zugeordnet werden können, so gilt: Es gibt keine Kanten, zwischen den Knoten der Bordnetzteilneher pᵢ- pⱼ. Stattdessen kann jeden der Knoten p1, p2...pn eine korrespondierender Knoten q auf dem Matrix-Koppler zugeordnet werden. Kann dem Matrix-Koppler als ein Interface Knoten q entsprechend der Graphen-.Theorie angesehen werden, so vereinfacht sich der bipartite Graph einer Bipartition weiter zu einem Sterngraph.
- Die Verbindungen eines Sterngraphen lassen sich als Punkt-zu Punkt Verbindungen im physischen Kabelsatz darstellen. Der Kabelsatz ist demnach von der Entflechtungsaufgabe befreit und seine Komplexität erheblich reduziert.

Der Matrix-Koppler kann ausgebildet sein, entsprechend einen multi-partiten Graphen, d.h. k-partiten Graphen, physisch umzusetzen.

Die Komplexitätsreduktion des physischen Leitungssatzes, oder einer großen Teilmenge desselben, ermöglicht deren automatisierten Fertigung. Die Sterngraph-Gestalt befreit eine Vorrichtung zur Fertigung von den folgenden Herausforderungen:
1. Keine Gemischtbestückung der Stecker aus unterschiedlichen Modulen (die in der neuen Struktur als Bipartitionen oder Topologieebenen fungieren). Es ist daher kein Nachstecken in der Fertigung notwendig.
2. Serielle fertigbare Punkt zu Punkt Struktur, keine Schleifen, keine Splices (Spleiß, Kabelverbindung)
3. Die Bipartitionen können aufgrund ihrer einfachen Struktur ohne Baubrett automatisiert gefertigt werden.
4. Ein Test auf korrekte Steckung (Durchgangstest) kann auf der Ebene der Bipartitionen erfolgen. Der aufwendige Endtest des gesamten Leitungssatzes nach dem Zusammenbau kann somit zumindest größtenteils entfallen.

Ein Herstellungsverfahren für ein Fahrzeugbordnetz eines Fahrzeugs, weist die Schritte Bereitstellen, Zuführen und Koppeln auf. Die Schritte des Zuführen und Koppeln werden entsprechend der Anzahl der Lasten wiederholt. In einem ersten Schritt des Bereitstellens wird eine Mehrzahl von Bordnetzteilnehmern in mindestens zwei räumlich oder funktionsseitig zu unterscheidenden Topologieebenen, eine Energieversorgungseinrichtung sowie zumindest ein Steuergerät bereitgestellt. In einem zweiten Schritt des Bereitstellens wird ein Schnittstellenmodul für das Fahrzeugbordnetz bereitgestellt. Anschließend wird ein erstes Leitungssatzsegment zugeführt. Das erste Leitungssatzsegment umfasst zumindest ein erstes Kommunikationsleitungssegment sowie ein erstes Energieversorgungsleitungssegment. Dabei sind jeweils ein erstes Ende des ersten einem ersten Ende des zumindest einen Leitungssatzsegments in einem ersten Interface gebündelt. Unter einem Interface kann auch ein Kontaktteil, ein Stecker oder eine Buchse verstanden werden. Unter einem Kommunikationsleitungssegment kann eine Datenleitung verstanden werden. Die Datenleitung, also das Kommunikationsleitungssegment, kann beispielsweise als Twisted-Pair-Leitung, Coax-Leitung, Folienleiter oder ähnliches ausgebildet sein. Im Schritt des Koppeln wird ein dem ersten Ende gegenüberliegendes zweites Ende des ersten Leitungssatzsegments mit einer ersten Last-Schnittstelle der Anzahl von Last-Schnittstellen des Schnittstellenmoduls gekoppelt.

Das Schnittstellenmodul für das Fahrzeugbordnetz umfasst eine Versorgungsschnittstelle zum Koppeln mit einem Pluspol der Energieversorgungseinrichtung des Fahrzeugs, eine Kommunikationsschnittstelle zum Empfangen und/oder Senden von Informationen von einem gekoppelten oder koppelbaren Steuergerät des Fahrzeugs, eine Anzahl von Last-Schnittstellen sowie zumindest einen Matrix-Koppler. Unter einer Last-Schnittstelle kann eine physische Stecker-Schnittstelle, eine Bordnetzteilnehmer-Schnittstelle oder allgemeiner ein Interface des Schnittstellenmoduls zu den daran angeschlossenen Bordnetzteilnehmern verstanden werden. So können einzelne Last-Schnittstellen letztlich auch als Aktor-Schnittstellten verstanden werden. Jeweils einem Bordnetzteilnehmer der Mehrzahl von Bordnetzteilnehmern ist zumindest eine Last-Schnittstelle der Anzahl von Last-Schnittstellen zugeordnet.

Der Matrix-Koppler ist ausgebildet, die Versorgungsschnittstelle sowie die Kommunikationsschnittstelle jeweils mit jeder Last-Schnittstelle der Anzahl von Last-Schnittstellen zu koppeln und so eine Schnittstelle zwischen den zumindest zwei zu unterscheidenden Topologieebenen darzustellen. Der Matrix-Koppler ist weiterhin ausgebildet, eine Entflechtungsaufgabe für eine Verknüpfung der Bordnetzteilnehmer untereinander darzustellen. Dabei bezeichnen Knoten eines Graphen, der Leitung-Stecker-Beziehungen des Matrix-Kopplers repräsentiert, jeweils eine Last-Schnittstelle der Anzahl von Last-Schnittstellen am Ende einer Leitung. Weiterhin bezeichnet eine erste Kante des Graphen eine Verbindungsbeziehung zumindest einer ersten Leitung zwischen einer ersten Last-Schnittstelle und einer zweiten Last-Schnittstelle. Weiterhin bezeichnet eine zweite Kante des Graphen eine Verbindungsbeziehung zumindest einer zweiten Leitung zwischen einer dritten Last-Schnittstelle und einer vierten Last-Schnittstelle, usw.

Wie einleitend bereits dargestellt findet in einem Fahrzeugbordnetz eine komplexe Interaktion der Bordnetzteilnehmer untereinander statt. Der Matrix-Koppler ist eingerichtet, die Entflechtungsaufgabe dieser komplexen Interaktion der Bordnetzteilnehmer untereinander zu lösen. So können alle Bordnetzteilnehmer mit dem Matrix-Koppler gekoppelt sein und stellen auch über diesen die Interaktion zu den anderen Bordnetzteilnehmern her. So stellt der Matrix-Koppler eine Verknüpfung der Bordnetzteilnehmer untereinander her.

Allgemein umfasst der Graph zumindest zwei partite Graphen mit zumindest zwei Partitionen, wobei jeweils der Eigenvektor einer jeweiligen Adjazenzmatrix der zumindest zwei Partitionen symmetrisch zu null ist. Dabei liegt zumindest ein Knoten eines jeden Graphen auf dem Matrix-Koppler. Der Graph kann beispielsweise zwei bipartite Graphen mit zwei Bipartitionen umfassen, wobei jeweils der Eigenvektor einer jeweiligen Adjazenzmatrix der zwei Bipartitionen symmetrisch zu null ist, in der Form [k,0..0,-k] oder [k,-k,0..0].

Der Matrix-Koppler ist geeignet die Entflechtungsaufgabe für die Verknüpfung der BordnetzTeilnehmer darzustellen. Ist die Kante eines Graphen definiert als Verbindungsbeziehung mindestens einer Leitung (Leitungssatzsegment) von einem Interface beispielsweise Stecker zu einem anderen Interface beispielsweise Stecker und sind die Knoten des Graphen definiert als die Schnittstelle jeweils am Ende einer Leitung in Form eines Steckers oder eines Übergabestützpunktes oder Splices, so gilt:
1. Durch die Einführung des Matrix Kopplers (MK) wird der unregelmäßige Graph, der die Leitungen-Stecker Beziehungen darstellt beispielsweise ersetzt durch zwei bipartite Graphen mit den Bipartitionen TE1-MK und TE2-MK. Die Graphen jeweils der beiden Bipartitionen sind dadurch gekennzeichnet, dass die Eigenvektoren ihrer Adjazenzmatrizen (Verbindungsmatrizen) symmetrisch zu null sind in der Form [k,0..0,-k] oder [k,-k,0..0]. Allgemein wird der unregelmäßige Graph in einen multipartiten Graphen überführt mit einer entsprechenden Anzahl an Partitionen.
2. Ein Knoten eines jeden Graphen liegt auf dem Matrix-Koppler.
3. Können alle Knoten auf den Matrix-Koppler einer Bipartition zu einem Knoten zusammengelegt werden (ein Interface und/oder ein Stecker auf dem Matrix-Koppler für jede Bipartition), so ist der Graph der Bipartition ein Sterngraph. Die Kantenlänge eines Pfades kann dabei größer als eins sein.
4. Ausnahmen kann es für Sonderleitungen geben, deren Interfacing über einen Matrix-Koppler technisch und/oder wirtschaftlich nicht sinnvoll ist. Diese werden dann in einem unabhängigen Leitungssatz-Layer angeordnet.

Das Schnittstellenmodul ist ausgebildet, eine elektrische Absicherung der Anzahl von Last-Schnittstellen zu den Bordnetzteilnehmern vorzunehmen. Unter einer elektrischen Absicherung kann verstanden werden, eine Leitung, einen Bordnetzteilnehmer oder andere Betriebsmittel vor Beschädigung durch zu starke Erwärmung, die aus dem über einen längeren Zeitraum fließenden Überstrom resultieren würde, zu bewahren. Ein Überstrom kann durch eine Überlastung oder einen Kurzschluss verursacht werden. So kann eine elektrische Absicherung auch als elektrische Sicherung oder OCP (=Over Current Protection) bezeichnet werden. Die elektrische Absicherung kann einen elektrischen Stromkreis unterbrechen, wenn der elektrische Strom eine festgelegte Stromstärke über eine vorgegebene Zeit hinaus überschreitet. Die elektrische Absicherung kann beispielsweise als eine Schmelzsicherung, ein Leitungsschutzschalter oder eine elektronische Sicherung ausgebildet sein.

Ein Vorteil des hier beschriebenen Fahrzeugbordnetzes ist es, dass durch die Lösung der Entflechtungsaufgabe innerhalb des Schnittstellenmoduls das Fahrzeugbordnetz sequentiell, eindimensional fertigbar ist. So lässt sich ein hoher Automatisierungsgrad erreichen. Weiterhin kann, zumindest bei einer Modulfertigung, auf die sonst üblichen Baubretter verzichtet werden. Durch den hohen Automatisierungsgrad lässt sich die Qualität während des Herstellungsprozesses steigern und/oder reproduzierbare Ergebnisse erzielen. Somit lassen sich die Anforderungen für das hoch-automatisierte Fahren leichter erfüllen.

Die elektrische Absicherung der Last-Schnittstellen und somit der Leitungssatzsegmente zu den Bordnetzteilnehmern kann elektronisch mit Mosfet-Schaltern und intelligenten Absicherungskennlinien erfolgen. So kann das Schnittstellenmodul elektronische Sicherungen aufweisen. Die elektronischen Sicherungen können Teil des Matrix-Kopplers sein. Unter einem Mosfet-Schalter kann ein Metall-Oxid-Halbleiter-Feldeffekttransistor (englisch metal-oxide-semiconductor field-effect transistor, MOSFET auch MOS-FET oder MOST) verstanden werden. Der Mosfet-Schalter gehört zu den Feldeffekttransistoren mit isoliertem Gate, auch als IGFET bezeichnet. Obwohl heute dotiertes Polysilizium als Gate-Material vorherrscht, wurde die Bezeichnung MOSFET beibehalten.

Das Schnittstellenmodul kann ausgebildet sein, eine Ansteuerfunktion und/oder eine Sensorauswertung für einen Bordnetzteilnehmer, mehrere Bordnetzteilnehmer oder alle Bordnetzteilnehmer der angeschlossenen Mehrzahl von Bordnetzteilnehmern bereitzustellen.

Die Anzahl an Last-Schnittstellen können jeweils als Stecker oder Buchse oder Übergabestützpunkt oder Splice ausgebildet sein. Eine Last-Schnittstelle stellt einen Übergabepunkt an ein Leitungssatzsegment dar, über welchen dann ein Bordnetzteilnehmer anbindbar ist oder angebunden ist.

Mit einem Schritt des Konfektionieren des Leitungssatzsegments kann vor dem Schritt des Zuführen des Leitungssatzsegments das zuzuführende Leitungssatzsegment konfektioniert werden. Dabei kann je Last der Mehrzahl von Lasten ein Leitungssatzsegment konfektioniert werden, welches jeweils zumindest ein Kommunikationsleitungssegment und zumindest ein Energieversorgungsleitungssegment gleicher Länge umfasst. Dabei kann jeweils ein erstes Ende des Kommunikationsleitungssegments und ein erstes Ende des Energieversorgungsleitungssegments an einem ersten Ende des Leitungssatzsegments in einem Interface, wie beispielsweise einem Kontaktteil oder Stecker, gebündelt sein, um über das Interface mit dem zugeordneten Bordnetzteilnehmer wie beispielsweise einer Last, einem Aktor oder einem Sensor, mechanisch und elektrisch gekoppelt zu werden.

Das Kommunikationsleitungssegment kann als ein Folienleiter ausgeformt sein. Unter einem Folienleiter kann eine Leiteranordnung zur Übertragung differentieller Kommunikationssignale verstanden werden. Ein Folienleiter kann aufweisen einen Leiterträger, eine Anzahl von Paaren von ersten Leitern, auch Hinleiter genannt, wobei jeweils zwei der ersten Leiter an ihren Enden elektrisch miteinander gekoppelt sind, und eine Anzahl von Paaren von zweiten Leitern, auch Rückleiter genannt, auf, wobei jeweils zwei der zweiten Leiter an ihren Enden elektrisch miteinander gekoppelt sind. So können als Leiterbündel jeweils einer der ersten Leiter eines Paares und einer der zweiten Leiter eines Paares gemeinsam auf einer ersten Seite des Leiterträgers und der weitere erste Leiter des jeweiligen Paares und der weitere zweite Leiter des jeweiligen Paares auf einer zweiten Seite des Leiterträgers angeordnet sein.

Bei einem Folienleiter können also Leiter paarweise auf unterschiedlichen Seiten des Leiterträgers angeordnet sein.

Durch die Anordnung von jeweils zwei Leitern auf jeder Seite des Leiterträgers des Folienleiters, entstehen Feldanordnungen, welche sich ähnlich der Felder bei einer Twisted-Pair-Leitung im Fernfeld gegenseitig aufheben. Gleichzeig wird die Immunität der Leiteranordnung gegen externe Störungen erhöht.

Da die Leiteranordnung als Folienleiter keine verdrillten Leiter aufweist, ist keine Schlaglänge der einzelnen Windungen vorhanden. Folglich kann die Schlaglänge nicht variieren und sich damit auch nicht negativ auf die Datenübertragung auswirken. Gleichzeitig wird die mechanische Stabilität der Leiteranordnung durch den Leiterträger sichergestellt.

Es versteht sich, dass die Leiteranordnung z.B. als sogenannter Folienleiter ausgebildet sein kann, bei welchem der Leiterträger ein flexibles, elektrisch isolierendes Material aufweist, auf welchem die Leiter angeordnet werden können.

Aus einem solchen flexiblen, elektrisch isolierendem Material werden üblicherweise flache Leiter hergestellt, welche üblicherweise keine Ausdehnung (sowohl in der Länge als auch der Breite) ermöglichen. Solche Leiter können aber geknickt bzw. verwunden oder gebogen werden, ohne dass die Leitungen beschädigt werden. Folglich können solche Leiter ähnlich flexibel eingesetzt werden wie Kabel.

Im Schritt des Bereitstellen des Schnittstellenmoduls kann das Schnittstellenmodul eine Masseschnittstelle zum Koppeln mit einem Minuspol der Energieversorgungseinrichtung aufweisen. Dabei kann dann im Schritt des Zuführen eine Masseleitung zugeführt werden. Der Matrix-Koppler kann ausgebildet sein, die Masseschnittstelle mit zumindest einer Last-Schnittstellen zu koppeln, mit einem Teil der Last-Schnittstellen zu koppeln oder jeweils mit jeder der Anzahl von Last-Schnittstellen zu koppeln. Dies kann auch durch Verbinden mit einem Masseanschluss des Fahrzeugs erfolgen, wodurch dann indirekt eine Verbindung mit dem Minuspol der Energieversorgungseinrichtung erfolgt.

Das Schnittstellenmodul kann einen Gleichspannungswandler aufweisen. Der Gleichspannungswandler kann eingangsseitig mit der Versorgungsschnittstelle verbunden sein. Der Gleichspannungswandler kann eingerichtet sein, das an der Versorgungsschnittstelle anliegende erste Spannungsniveau auf ein von dem ersten Spannungsniveau verschiedenes zweites Spannungsniveau zu wandeln und ausgangsseitig das zweite Spannungsniveau dem Matrix-Koppler bereitzustellen. Dabei kann der Matrix-Koppler eingerichtet sein, das erste Spannungsniveau und gleichzeitig oder alternativ das zweite Spannungsniveau Schnittstellen-individuell der Anzahl von Last-Schnittstellen bereitzustellen. So können beispielsweise einer ersten Last-Schnittstelle das erste Spannungsniveau, einer zweiten Last-Schnittstelle das zweite Spannungsniveau und einer dritten Last-Schnittstelle sowohl das erste Spannungsniveau als auch das zweite Spannungsniveau bereitgestellt werden.

Das erste Spannungsniveau kann höher als das zweite Spannungsniveau sein. Beispielsweise kann das erste Spannungsniveau 48 V und das zweite Spannungsniveau 12 V betragen. Dabei handelt es sich um einen Nennbereich, der je nach Energieversorgungsystem einen entsprechenden Toleranzbereich mit abdeckt. Das erste Spannungsniveau von 48 V kann einen Arbeitsbereich zwischen 36 V und 54 V bezeichnen. Die tatsächliche Spannung bei dem zweiten Spannungsniveau von 12 V kann bis zu 14,4 V betragen.

Ein Fahrzeugbordnetz für ein Fahrzeug weist auf eine Mehrzahl von Lasten, eine Energieversorgungseinrichtung, zumindest ein Steuergerät, zumindest ein Schnittstellenmodul für das Fahrzeugbordnetz, sowie ein Leitungssatzsegment je Last der Mehrzahl von Lasten. Jedes Leitungssatzsegment weist zumindest ein erstes Kommunikationsleitungssegment, und ein erstes Energieversorgungsleitungssegment auf. Dabei sind jeweils ein erstes Ende des ersten Kommunikationsleitungssegments und des ersten Energieversorgungsleitungssegments an einem ersten Ende des zumindest einen Leitungssatzsegments in einem ersten Interface gebündelt. Das Schnittstellenmodul umfasst eine Versorgungsschnittstelle zum Koppeln mit einem Pluspol der Energieversorgungseinrichtung des Fahrzeugs, eine Kommunikationsschnittstelle zum Empfangen und/oder Senden von Informationen von einem gekoppelten oder koppelbaren Steuergerät des Fahrzeugs, eine Anzahl von Last -Schnittstellen, und zumindest einen Matrix-Koppler, der ausgebildet ist, die Versorgungsschnittstelle sowie die Kommunikationsschnittstelle jeweils mit jeder der Anzahl von Last-Schnittstellen zu koppeln.

### Kurze Figurenbeschreibung

Nachfolgend wird ein vorteilhaftes Ausführungsbeispiel der Erfindung unter Bezugnahme auf die begleitenden Figuren erläutert. Es zeigen:
- Figur 1: Beispielhafte Teilmenge eines Bordnetzes nach dem Stand der Technik;
- Figur 2: Graph zur Teilmenge eines Bordnetzes nach dem Stand der Technik;
- Figur 3: Graph eines kompletten Innenraumleitungssatzes nach dem Stand der Technik;
- Figur 4: Teilmenge eines Bordnetzes mit Matrix-Koppler gemäß der vorliegenden Erfindung;
- Figur 5: Graph der Teilmenge eines Bordnetzes mit Matrix-Koppler gemäß der vorliegenden Erfindung;
- Figur 6: Graph eines kompletten Innenraumleitungssatzes mit vier Matrix-Kopplern gemäß der vorliegenden Erfindung;
- Figur 7: Adjazenzmatrix zum Graphen der Teilmenge eines Bordnetzes nach dem Stand der Technik;
- Figur 8: Adjazenzmatrix zum Graph der Teilmenge eines Bordnetzes mit Matrix-Koppler gemäß der vorliegenden Erfindung;
- Figur 9: Darstellung der Leitungssatzelemente gemäß der vorliegenden Erfindung
- Figur 10: Vorrichtung zur Herstellung der Leitungssatzelemente gemäß der vorliegenden Erfindung;
- Figur 11: Matrix-Koppler mit integriertem 48V/12V Wandler;
- Figur 12: Matrix-Koppler in einem Bordnetz mit konventioneller Steuergeräte Architektur;
- Figur 13: Matrix Koppler mit integrierten Funktions-HW-Treibern und SW-.Treibern nach neuer Bordnetz-Architektur mit Hochleistungs-Rechnern;
- Figur 14: einen Ablaufplan eines Herstellungsverfahrens gemäß einem Ausführungsbeispiels der vorliegenden Erfindung; und
- Figur 15: ein Fahrzeug mit einem Fahrzeugbordnetz gemäß einem Ausführungsbeispiels der vorliegenden Erfindung.

Die Figuren sind lediglich schematische Darstellungen und dienen nur der Erläuterung der Erfindung.

### Detaillierte Beschreibung

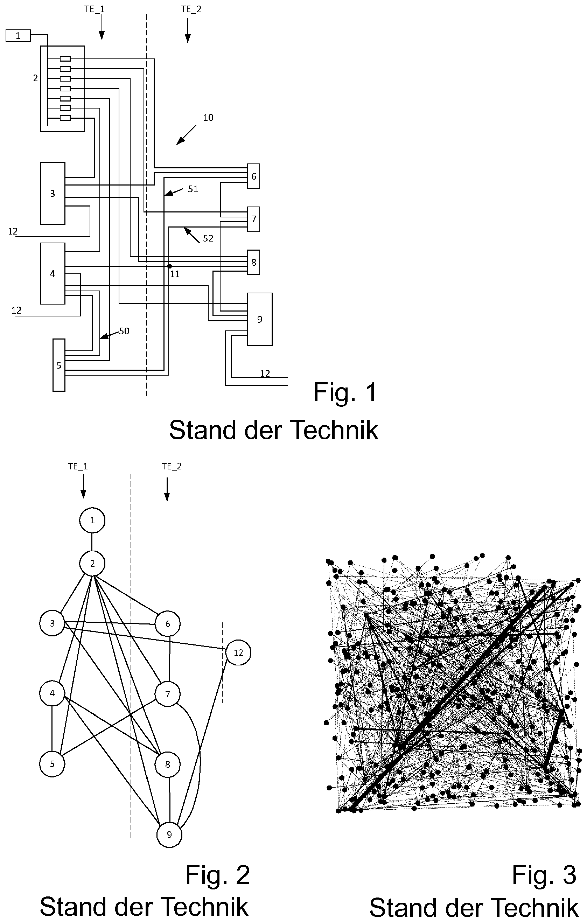

Figur 1 zeigt beispielhafte Teilmenge eines Fahrzeugbordnetzes BN nach dem Stand der Technik. Die Bordnetzteilnehmer (Steuergeräte, Aktoren, Sensoren) 3,4,5,6,7,8,9 beziehen ihre 12 V Versorgung von einem Stromverteiler 2 der von der Batterie 1 gespeist wird. Der Leitungssatz 10 weist Splices 11 auf, um im konventionellen Leitungssatz Sternpunkt-Verbindungen darzustellen. Es sind zwei Topologieebenen TE_1 und TE_2 vorhanden. Demnach wäre es vorteilhaft die Bordnetzteilnehmer 3,4,und 5 über ein Leitungssatzmodul und die Teilnehmer 6,7,8 und 9 über ein zweites Leitungssatzmodul zu versorgen. Aufgrund der Querverbindungen aller Teilnehmer ist eine Aufteilung in zwei eigenständig Module aber nicht möglich. 52 zeigt exemplarisch eine Verbindung zwischen TE_1 und TE_2. 50 zeigt eine Verbindung innerhalb des TE_1.

Figur 2 zeigt den Graphen, der die Verbindungsbeziehungen der Bordnetzteilnehmer 3,4,5,6,7,8,9 für die Teilmenge eines Bordnetzes nach dem Stand der Technik zeigt. 12 ist hier die Verbindung zu anderen Topologieebenen. Der Graph ist nicht flach, nicht bipartit und eine Unterteilung in Teilgraphen gemäß TE_1 und TE_2 ist nicht möglich.

Figur 3 zeigt den Graphen eines reellen Innenraumkabelsatzes, d.h. eines Fahrzeugbordnetztes BN, nach dem Stand der Technik. Hier ist die Komplexität erkennbar und der Graph zeigt mehrere Ebenen tiefe Verknüpfung.

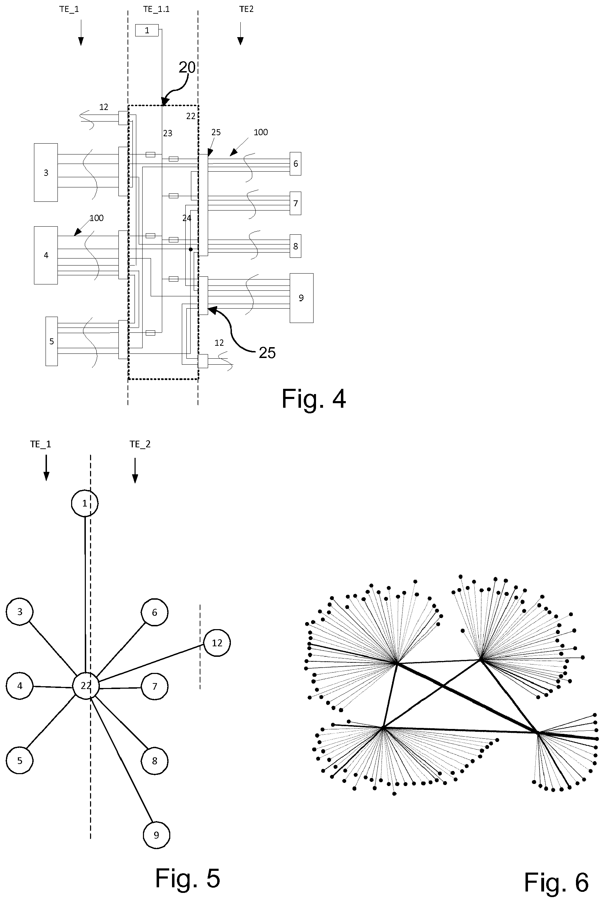

Figur 4 zeigt die erfinderische Lösung mit der Einführung eines Schnittstellenmoduls 22 welches einen Matrix-Koppler 24 beinhaltet. Des Weiteren beinhaltet das Schnittstellenmodul 22 die Verteiler-Struktur 23 zur abgesicherten Versorgung der Bordnetzteilnehmer 3, 4, 5, 6, 7, 8, 9 mit Batteriespannung. Die Bordnetzteilnehmer 3, 4, 5, 6, 7, 8, 9 sind über Last-Schnittstellen 25 mit dem Schnittstellenmodul 22 verbunden. Die Energieversorgungseinrichtung 1 ist über eine Versorgungsschnittstelle 20 des Schnittstellenmoduls 22 mit der Verteiler-Struktur 23 elektrisch gekoppelt.

Figur 5 zeigt den Stern-Graphen der neuen Bordnetzstruktur mit Matrix-Koppler 24 für zwei Topologieebenen TE_1, TE_2.

Figur 6 zeigt den Graphen eines kompletten Innenraum-Kabelsatzes, d.h. eines exemplarischen Fahrzeugbordnetzes BN, mit vier Matrix Kopplern 24. Im Vergleich zu Figur 3 ist hier die erheblich reduzierte Komplexität zu erkennen.

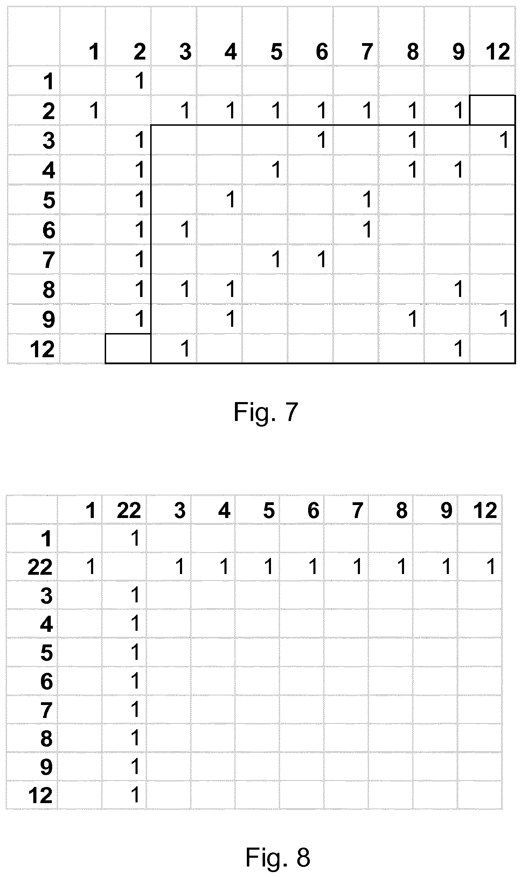

Figur 7 zeigt die Adjazenzmatrix zum Graphen des konventionellen Teilbordnetzes nach Figur 2. Figur 8 zeigt die Adjazenzmatrix zum Graphen mit Matrix-Koppler nach Figur 4. Die in Figur 7 eingerahmten Verbindungsbeziehungen machen den Unterschied der beiden Adjazenzmatrizen aus. Genau diese Verbindungen werden gemäß dieses Beispiels durch den Matrix-Koppler 24 zur Verfügung gestellt und müssen nicht mehr als komplexe Verflechtungen im Leitungssatz dargestellt werden.

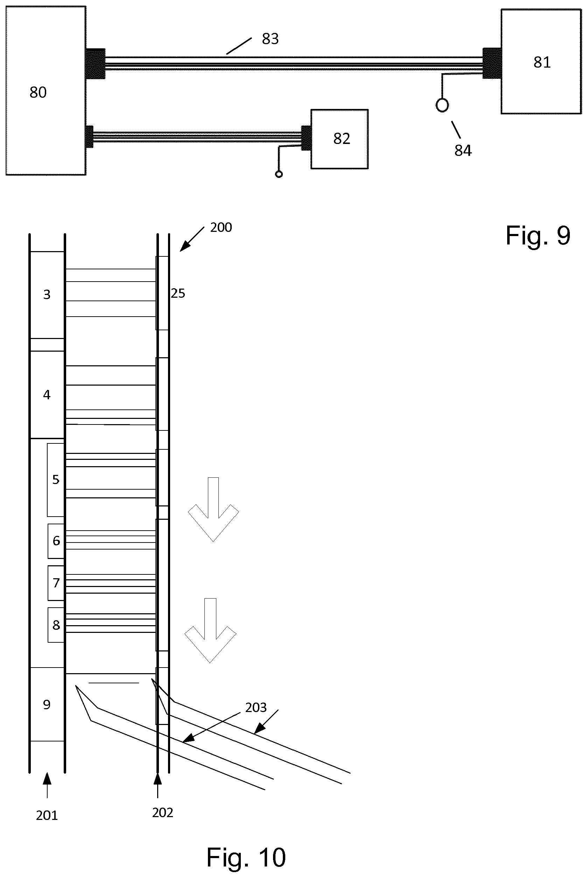

Figur 9 zeigt die vereinfachte Struktur des physischen Bordnetzes, d.h. eines exemplarischen Fahrzeugbordnetzes BN, mit mehrfach Punkt-zu-Punkt-Verbindungen 83 vom Matrix-Koppler 80 zu den Bordnetzteilnehmern 81, 82. Die Masseanbindung 84 der Bordnetzteilnehmer 81, 82 kann weiterhin an lokalen Massepunkten erfolgen. Wahlweise nimmt auch der Matrix-Koppler 80 die Verteilung des Masse-Potentials vor. Dies ist insbesondere bei nicht leitenden oder schlecht leitenden Fahrzeug-Karosserien vorteilhaft.

Figur 10 zeigt eine Vorrichtung zur Fertigung des vereinfachten physischen Leitungssatzes, d.h. eines exemplarischen Fahrzeugbordnetzes BN, gemäß der hier vorgestellten BordnetzStruktur mit Matrix-Koppler 80. Die Vorrichtung weist eine Schiene oder Aufnahme 201 auf, in der die Stecker der Bordnetzteilnehmer 3, 4, 5, 6, 7, 8, 9 durch einen Bestück-Automaten eingesetzt werden. In die gegenüberliegende Aufnahme 202 werden die Stecker-Elemente des Matrix-Kopplers bestückt. Ein Pinning-Automat mit den Bestückarmen 203 führt nun jede Leitung mit ihrem Kontakt links und rechts in die Steckerkammern links und rechts ein. Dabei geht er Leitung für Leitung sequentiell vor und kann von oben nach unten (oder unten nach oben) nacheinander alle Leitungen einsetzen. Die unterschiedlichen Leitungslängen für jeden Stecker fallen dabei in einen Schacht zwischen den Aufnahmen 201 und 202.

Nachdem die Stecker fertig mit Leitungen bestückt sind, können sie aus einer Halterung z.B. 202 entnommen und zum Wickeln gestreckt werden. Auf diese Weise werden vollständige Leitungssatz-Module, die kein Nachpinnen erfordern, also Leitungssatz-Bipartitionen, ohne Baubrett gefertigt.

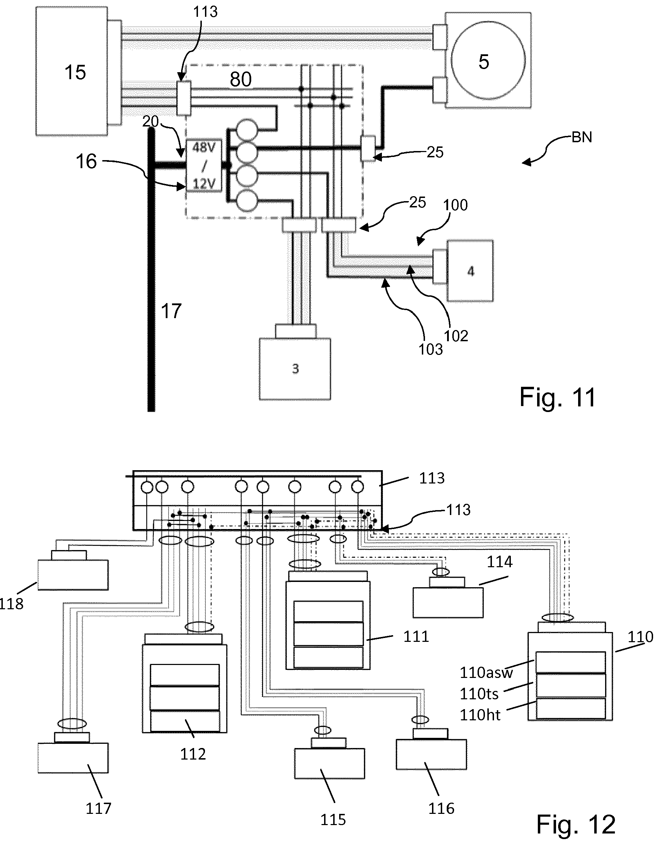

Figur 11 zeigt eine Teilbordnetz für eine Motorische Funktion (Bordnetzteilnehmer) 5 mit den Sensoren (Bordnetzteilnehmer) 3, 4 und dem Steuergerät 15. Hier beinhaltet der Matrix-Koppler 80 einen DC/DC-Wandler, d.h. Gleichspannungswandler 16, von 48 V auf 12 V. In dieser Ausprägung wird auf einen zentralen 48V/12V-Wandler verzichtet und die Hauptversorgung erfolgt über einen 48-V-Backbone 17. Die Stromstärke auf dem 48-V-Versorgungsbackbone wird somit um den Faktor 4 verringert gegenüber einem 12-V-Versorgungs-Backbone.

Mit anderen Worten zeigt Fig. 11 ein Fahrzeugbordnetz BN für ein Fahrzeug (500). Eine Mehrzahl von Bordnetzteilnehmern 3, 4, 5 ist in mindestens zwei räumlich oder funktionsseitig zu unterscheidenden Topologieebenen (TE1, TE2) aufgeteilt. Die Energieversorgungseinrichtung 1 wird durch ein 48-V-Backbone 17 repräsentiert. Weiterhin weist das Fahrzeugbordnetz BN ein Steuergerät 15 auf. Das Schnittstellenmodul 22 für das Fahrzeugbordnetz BN weist eine Versorgungsschnittstelle 20 auf, die über das 48-V-Backbone 17 mit einem Pluspol der Energieversorgungseinrichtung 1 gekoppelt ist. Weiterhin weist das Schnittstellenmodul 22 eine Kommunikationsschnittstelle 113 zum Empfangen und/oder Senden von Informationen von dem hiermit gekoppelten Steuergerät 15 auf. Weiterhin ist eine Anzahl von Last-Schnittstellen 25 vorgesehen, wobei jeweils einem Bordnetzteilnehmer 3, 4, 5 zumindest eine Last-Schnittstelle 25 der Anzahl von Last-Schnittstellen 25 zugeordnet ist. Der Matrix-Koppler 80 im Schnittstellenmodul 22 ist ausgebildet, die Versorgungsschnittstelle 20 sowie die Kommunikationsschnittstelle 113 jeweils mit jeder Last-Schnittstelle 25 der Anzahl von Last-Schnittstellen 25 zu koppeln und so eine Schnittstelle zwischen den zumindest zwei zu unterscheidenden Topologieebenen (TE1, TE2) darzustellen. Der Matrix-Koppler 80 ist weiterhin eingerichtet, eine Entflechtungsaufgabe für eine Verknüpfung der Bordnetzteilnehmer 3, 4, 5 darzustellen. Knoten eines Leitung-Stecker-Beziehungen des Matrix-Kopplers 80 repräsentierenden Graphen bezeichnen jeweils eine Last-Schnittstelle 25 der Anzahl von Last-Schnittstellen 25 am Ende einer Leitung und eine Kante des Graphen bezeichnet eine Verbindungsbeziehung zumindest einer Leitung zwischen einer ersten Last-Schnittstelle 25 und einer zweiten Last-Schnittstelle 25, wobei der Graph zumindest zwei partite Graphen mit zumindest zwei Partitionen (TE1-MK, TE2-MK) umfasst. Ein Knoten eines jeden Graphen liegt auf dem Matrix-Koppler 80. Das Schnittstellenmodul 22 ist eingerichtet, eine elektrische Absicherung der Anzahl von Last-Schnittstellen 25 zu den Bordnetzteilnehmern 3, 4, 5 vorzunehmen. Ein Leitungssatzsegment 100 je Bordnetzteilnehmer 3, 4, 5 der Mehrzahl von Bordnetzteilnehmern 3, 4, 5 weist zumindest ein erstes Kommunikationsleitungssegment 102, und ein erstes Energieversorgungsleitungssegment 103 je Leitungssatzsegment 100 auf, wobei jeweils ein erstes Ende des ersten Kommunikationsleitungssegments 102 und des ersten Energieversorgungsleitungssegments 103 an einem ersten Ende des zumindest einen Leitungssatzsegments 100 in einem ersten Interface gebündelt sind.

Figur 12 zeigt ein Teilbordnetz mit Matrix-Koppler 113, Steuergeräten 110, 111, 112 und Sensoren/Aktuatoren 114, 115, 116, 117, 118. Unter den Sensoren/Aktoren 114, 115, 116, 117, 118 können also Bordnetzteilnehmer 114, 115, 116, 117, 118 verstanden werden. Die Bordnetzstruktur ist eine Sterngraph und genügt deshalb dem neuen Ansatz. Die Steuergeräte sind aber weiterhin von konventioneller Ausprägung und beinhalten gemäß eines Schichtenmodells die Hardware-Ebene (HW-Treiber), die Treiber-Ebene (Software-Treiber zu der Hardware und zur Kommunikation) und die Applikations-Software-Ebene, in der die Betriebsstrategie abstrahiert von der physischen Implementierung der Funktion dargestellt ist.

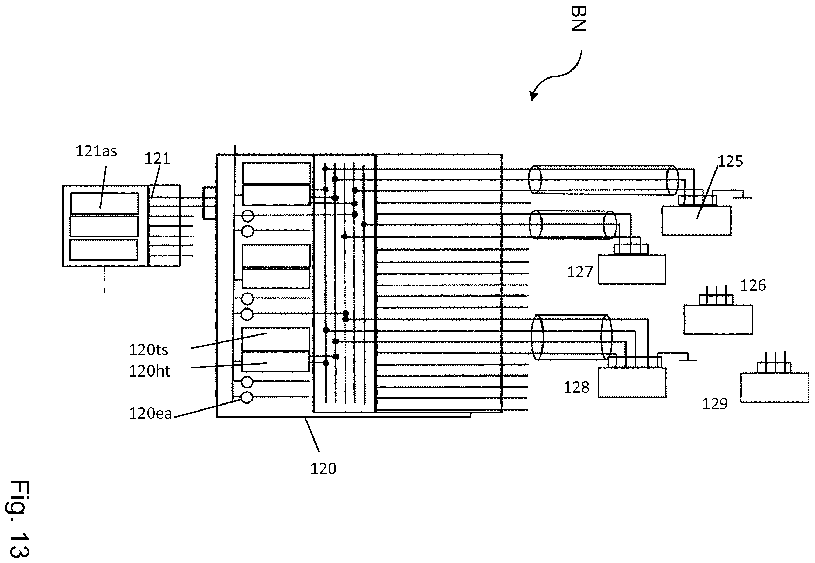

Figur 13 zeigt ein neues Bordnetzsystem, d.h. Fahrzeugbordnetz BN, dass dem Anspruch genügt die Informationsverarbeitung in Hochleistungsrechnern zu bündeln und die Steuergeräte davon zu befreien. Ausgehend von der Einführung von Hochleistungsrechnern im Fahrzeug ist nun die Aufintegration der restlichen Inhalte der Steuergeräte in den Matrix-Koppler 120 umgesetzt. Das Schnittstellenmodul mit Matrix-Koppler beinhaltet somit auch die Hardware-Treiberschicht 120hs und SW-Treiberschicht 120ts für die Funktionen. Die Mosfet-Treiber 120ea der Funktionen übernehmen nun gleichzeitig die elektronische Absicherung der Leitungen. Die Sensoren und Aktoren 125, 126, 127, 128, 129 (Bordnetzteilnehmer 125, 126, 127, 128, 129) sind über mehrfach Punkt-zu-Punkt-Verbindungen mit dem Matrix-Koppler 120 verbunden.

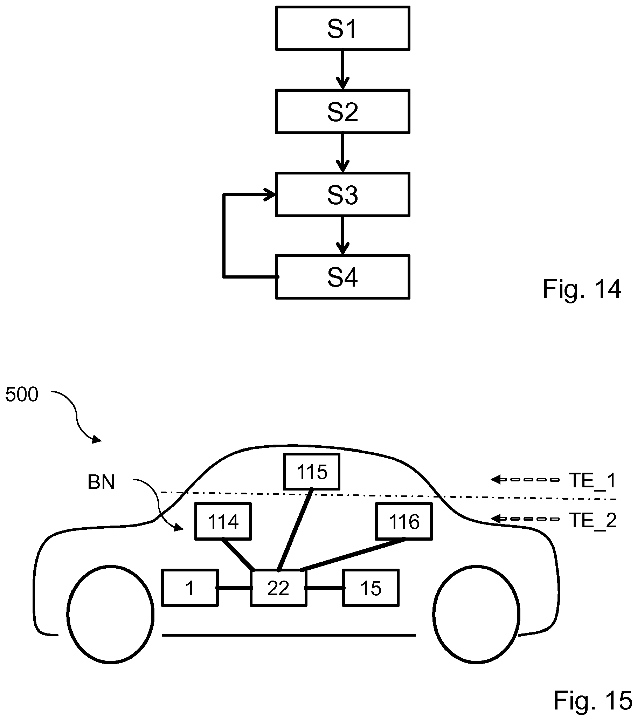

Figur 14 zeigt einen Ablaufplan eines Herstellungsverfahren für ein Fahrzeugbordnetz eines Fahrzeugs. Das Herstellungsverfahren umfasst einen Schritt S1 des Bereitstellens, einen Schritt S2 des Bereitstellens, einen Schritt S3 des Zuführens sowie einen Schritt S4 des Koppelns. Die Schritte S3 des Zuführens sowie S4 des Koppelns werden wiederholt ausgeführt.

Im Schritt S1 des Bereitstellens werden eine Mehrzahl von Bordnetzteilnehmern in mindestens zwei räumlich oder funktionsseitig zu unterscheidenden Topologieebenen TE1, TE2, eine Energieversorgungseinrichtung, und zumindest ein Steuergerät bereitgestellt. Im Schritt S2 des Bereitstellens wird ein Schnittstellenmodul für das Fahrzeugbordnetz bereitgestellt. Das Schnittstellenmodul umfasst eine Versorgungsschnittstelle (22) zum Koppeln mit einem Pluspol der Energieversorgungseinrichtung des Fahrzeugs, eine Kommunikationsschnittstelle zum Empfangen und/oder Senden von Informationen von einem gekoppelten oder koppelbaren Steuergerät des Fahrzeugs, eine Anzahl von Last-Schnittstellen, wobei jeweils einem Bordnetzteilnehmer der Mehrzahl von Bordnetzteilnehmern zumindest eine Last-Schnittstelle der Anzahl von Last-Schnittstellen zugeordnet ist sowie zumindest einen Matrix-Koppler. Der Matrix-Koppler ist ausgebildet, die Versorgungsschnittstelle sowie die Kommunikationsschnittstelle jeweils mit jeder Last-Schnittstelle der Anzahl von Last-Schnittstellen zu koppeln und so eine Schnittstelle zwischen den zumindest zwei zu unterscheidenden Topologieebenen (TE1, TE2) darzustellen, wobei der Matrix-Koppler eingerichtet ist, eine Entflechtungsaufgabe für eine Verknüpfung der Bordnetzteilnehmer darzustellen, wobei Knoten eines Leitung-Stecker-Beziehungen des Matrix-Kopplers repräsentierenden Graphen jeweils eine Last-Schnittstelle der Anzahl von Last-Schnittstellen am Ende einer Leitung bezeichnen, und wobei eine Kante des Graphen eine Verbindungsbeziehung zumindest einer Leitung zwischen einer ersten Last-Schnittstelle und einer zweiten Last-Schnittstelle bezeichnen, wobei der Graph zumindest zwei partite Graphen mit zumindest zwei Partitionen (TE1-MK, TE2-MK) umfasst, wobei jeweils der Eigenvektor einer jeweiligen Adjazenzmatrix der beiden Partitionen (TE1-MK, TE2-MK) symmetrisch zu null ist, und wobei ein Knoten eines jeden Graphen auf dem Matrix-Koppler liegt. Das Schnittstellenmodul ist ausgebildet, die Anzahl von Last-Schnittstellen zu den Bordnetzteilnehmern elektrisch abzusichern.

Im Schritt S3 des Zuführens wird ein erstes Leitungssatzsegment, aufweisend zumindest ein erstes Kommunikationsleitungssegment, und ein erstes Energieversorgungsleitungssegment zugeführt, wobei jeweils ein erstes Ende des ersten Kommunikationsleitungssegments und des ersten Energieversorgungsleitungssegments an einem ersten Ende des zumindest einen Leitungssatzsegments in einem ersten Interface gebündelt sind. Im Schritt S4 des Koppelns wird ein dem ersten Ende gegenüberliegendes zweites Ende des ersten Leitungssatzsegments mit einer ersten Last-Schnittstelle der Anzahl von Last-Schnittstellen gekoppelt. Die Schritte des Zuführen S3 und des Koppeln S4 für jede Last der Mehrzahl von Lasten werden entsprechend der Anzahl der Last-Schnittstellen beziehungsweise Bordnetzteilnehmer wiederholt.

Figur 15 zeigt ein Fahrzeug mit einem Fahrzeugbordnetz BN. Das Fahrzeugbordnetz BN umfasst eine Mehrzahl von Bordnetzteilnehmern 114, 115, 116, die in zwei zwei räumlich oder funktionsseitig zu unterscheidenden Topologieebenen TE_1, TE_2 angeordnet sind. Weiterhin umfasst das Fahrzeugbordnetz BN ein Energieversorgungseinrichtung 1 sowie ein Steuergerät 15. Alle diese Komponenten sind über ein Schnittstellenmodul 22 miteinander gekoppelt.

### BEZUGSZEICHENLISTE

- BN: Bordnetz, Fahrzeugbordnetz
- 1: Batterie, Energieversorgungseinrichtung
- 2: Stromverteiler
- 3, 4, 5, 6, 7, 8, 9: Bordnetzteilnehmer, Last
- 10: Leitungssatz
- 11: Splices
- TE_1: erste Topologieebene
- TE_2: zweite Topologieebene
- 12, 50, 52: Verbindung
- 15: Steuergerät
- 16: Gleichspannungswandler
- 17: 48-V-Backbone
- 20: Versorgungsschnittstelle
- 22: Schnittstellenmodul
- 23: Verteiler-Struktur
- 24, 80, 120: Matrix-Koppler
- 25: Last-Schnittstelle
- 81, 82: Bordnetzteilnehmer
- 83: Punkt-zu-Punkt-Verbindungen, Leitungssatzsegment
- 84: Masseanbindung
- 100: Leitungssatzsegment
- 102: Kommunikationsleitungssegment
- 103: Energieversorgungsleitungssegment
- 110, 111, 112: Steuergerät
- 113: Kommunikationsschnittstelle
- 114, 115, 116, 117, 118: Sensoren/Aktoren, Bordnetzteilnehmer
- 120hs: Hardware-Treiberschicht
- 120ts: SW-Treiberschicht
- 120ea: Mosfet-Treiber
- 125, 126, 127, 128, 129: Sensoren/Aktoren, Bordnetzteilnehmer
- 201: Schiene, Aufnahme
- 202: Aufnahme
- 203: Bestückarm
- 500: Fahrzeug

## Patentansprüche

1. Herstellungsverfahren für ein Fahrzeugbordnetz (BN) eines Fahrzeugs (500), mit den folgenden Schritten:
a. Bereitstellen (S1)
i. einer Mehrzahl von Bordnetzteilnehmern (3, 4, 5, 6, 7, 8, 9; 114, 115, 116, 117, 118;125, 126, 127, 128, 129) in mindestens zwei räumlich oder funktionsseitig zu unterscheidenden Topologieebenen (TE1, TE2),
ii. einer Energieversorgungseinrichtung (1), und
iii. zumindest ein Steuergerät (15);
b. Bereitstellen (S2) eines Schnittstellenmoduls (22) für das Fahrzeugbordnetz (BN), umfassend:
i. eine Versorgungsschnittstelle (20) zum Koppeln mit einem Pluspol der Energieversorgungseinrichtung (1) des Fahrzeugs,
ii. eine Kommunikationsschnittstelle (113) zum Empfangen und/oder Senden von Informationen von einem gekoppelten oder koppelbaren Steuergerät (15; 110, 111, 112) des Fahrzeugs (500),
iii. eine Anzahl von Last-Schnittstellen (25), wobei jeweils einem Bordnetzteilnehmer (3, 4, 5, 6, 7, 8, 9; 114, 115, 116, 117, 118;125, 126, 127, 128, 129) der Mehrzahl von Bordnetzteilnehmern (3, 4, 5, 6, 7, 8, 9; 114, 115, 116, 117, 118;125, 126, 127, 128, 129) zumindest eine Last-Schnittstelle (25) der Anzahl von Last-Schnittstellen (25) zugeordnet ist,
iv. zumindest einen Matrix-Koppler (24, 80, 120), der ausgebildet ist, die Versorgungsschnittstelle (20) sowie die Kommunikationsschnittstelle (113) jeweils mit jeder Last-Schnittstelle (25) der Anzahl von Last-Schnittstellen (25) zu koppeln und so eine Schnittstelle zwischen den zumindest zwei zu unterscheidenden Topologieebenen (TE1, TE2) darzustellen, und der Matrix-Koppler (24, 80, 120) weiterhin ausgebildet ist, die Anzahl von Last-Schnittstellen (25) untereinander zu koppeln,
- wobei der Matrix-Koppler (24, 80, 120) eingerichtet ist, eine Entflechtungsaufgabe für eine Verknüpfung der Bordnetzteilnehmer (3, 4, 5, 6, 7, 8, 9; 114, 115, 116, 117, 118;125, 126, 127, 128, 129) darzustellen,
- wobei Knoten eines Leitung-Stecker-Beziehungen des Matrix-Kopplers (24, 80, 120) repräsentierenden Graphen jeweils eine Last-Schnittstelle (25) der Anzahl von Last-Schnittstellen (25) am Ende einer Leitung bezeichnen, und
- wobei eine Kante des Graphen eine Verbindungsbeziehung zumindest einer Leitung zwischen einer ersten Last-Schnittstelle (25) und einer zweiten Last-Schnittstelle (25) bezeichnet,
- wobei der Graph zumindest zwei partite Graphen mit zumindest zwei Partitionen (TE1-MK, TE2-MK) umfasst, und
- wobei ein Knoten eines jeden Graphen auf dem Matrix-Koppler (24, 80, 120) liegt,
v. wobei das Schnittstellenmodul (22) eingerichtet ist, eine elektrische Absicherung der Anzahl von Last-Schnittstellen (25) zu den Bordnetzteilnehmern (3, 4, 5, 6, 7, 8, 9; 114, 115, 116, 117, 118;125, 126, 127, 128, 129) vorzunehmen,
c. Zuführen (S3) eines ersten Leitungssatzsegments (100), aufweisend zumindest ein erstes Kommunikationsleitungssegment (102), und ein erstes Energieversorgungsleitungssegment (103), wobei jeweils ein erstes Ende des ersten Kommunikationsleitungssegments (102) und des ersten Energieversorgungsleitungssegments (103) an einem ersten Ende des zumindest einen Leitungssatzsegments (100) in einem ersten Interface gebündelt sind;
d. Koppeln (S4) eines dem ersten Ende gegenüberliegenden zweiten Ende des ersten Leitungssatzsegments (100) mit einer ersten Last-Schnittstelle (25) der Anzahl von Last-Schnittstellen (25); und
e. Wiederholen der Schritte des Zuführen (S3) und des Koppeln (S4) für jeden Bordnetzteilnehmer (3, 4, 5, 6, 7, 8, 9; 114, 115, 116, 117, 118;125, 126, 127, 128, 129) der Mehrzahl von Bordnetzteilnehmern (3, 4, 5, 6, 7, 8, 9; 114, 115, 116, 117, 118;125, 126, 127, 128, 129), um ein automatisiert fertigbares Fahrzeugbordnetz (BN) mit einer Entflechtung innerhalb des Matrix-Kopplers (24, 80, 120) herzustellen.

2. Herstellungsverfahren gemäß Anspruch 1, mit einem Schritt des Konfektionieren des Leitungssatzsegments (100) vor dem Schritt des Zuführen (S3) des Leitungssatzsegments (100), wobei je Bordnetzteilnehmer (3, 4, 5, 6, 7, 8, 9; 114, 115, 116, 117, 118;125, 126, 127, 128, 129) der Mehrzahl von Bordnetzteilnehmern (3, 4, 5, 6, 7, 8, 9; 114, 115, 116, 117, 118;125, 126, 127, 128, 129) ein Leitungssatzsegment (100) konfektioniert wird, welches ein Kommunikationsleitungssegment (102) und Energieversorgungsleitungssegment (103) gleicher Länge umfasst, und wobei jeweils ein erstes Ende des Kommunikationsleitungssegments (102) und des Energieversorgungsleitungssegments (103) an einem ersten Ende des Leitungssatzsegments (100) in einem zugeordneten Interface gebündelt sind.

3. Herstellungsverfahren gemäß einem der vorangegangenen Ansprüche, bei dem der Graph zwei bipartite Graphen mit zwei Bipartitionen (TE1-MK, TE2-MK) umfasst.

4. Herstellungsverfahren gemäß dem vorangegangenen Anspruch, bei dem jeweils der Eigenvektor einer jeweiligen Adjazenzmatrix der beiden Bipartitionen (TE1-MK, TE2-MK) symmetrisch zu null ist, und wobei ein Knoten eines jeden Graphen auf dem Matrix-Koppler (24, 80, 120) liegt.

5. Herstellungsverfahren gemäß einem der vorangegangenen Ansprüche, bei dem das Schnittstellenmodul (22) elektronische Sicherungen aufweist, bevorzugt dass der Matrix-Koppler (24, 80, 120) elektronische Sicherungen aufweist, die eingerichtet sind, die elektrische Absicherung der Anzahl von Last-Schnittstellen (25) zu den Bordnetzteilnehmern (3, 4, 5, 6, 7, 8, 9; 114, 115, 116, 117, 118;125, 126, 127, 128, 129) vorzunehmen.

6. Herstellungsverfahren gemäß einem der vorangegangenen Ansprüche, wobei die elektrische Absicherung der Last-Schnittstellen (25) und somit der Leitungssatzsegmente (100) zu den Bordnetzteilnehmern (3, 4, 5, 6, 7, 8, 9; 114, 115, 116, 117, 118;125, 126, 127, 128, 129) elektronisch mit Mosfet-Schaltern und intelligenten Absicherungskennlinien und/oder mit Schmelzsicherungen erfolgt.

7. Herstellungsverfahren gemäß einem der vorangegangenen Ansprüche, wobei das Schnittstellenmodul (22) eingerichtet ist, eine Ansteuerfunktion und/oder eine Sensorauswertung für einen Bordnetzteilnehmer (3, 4, 5, 6, 7, 8, 9; 114, 115, 116, 117, 118;125, 126, 127, 128, 129), mehrere Bordnetzteilnehmer (3, 4, 5, 6, 7, 8, 9; 114, 115, 116, 117, 118;125, 126, 127, 128, 129) oder alle Bordnetzteilnehmer (3, 4, 5, 6, 7, 8, 9; 114, 115, 116, 117, 118;125, 126, 127, 128, 129) der angeschlossenen Mehrzahl von Bordnetzteilnehmern (3, 4, 5, 6, 7, 8, 9; 114, 115, 116, 117, 118;125, 126, 127, 128, 129) bereitzustellen.

8. Herstellungsverfahren gemäß einem der vorangegangenen Ansprüche, wobei die Anzahl an Last-Schnittstellen (25) jeweils als Stecker oder Buchse oder Übergabestützpunkt oder Splice ausgebildet sind.

9. Herstellungsverfahren gemäß einem der vorangegangenen Ansprüche, wobei das Kommunikationsleitungssegment (102) als ein Folienleiter ausgeformt ist.

10. Herstellungsverfahren gemäß einem der vorangegangenen Ansprüche, mit einem Schritt des Koppeln der Versorgungsschnittstelle (20) des Schnittstellenmoduls (22) mittels einer Energieversorgungsleitung mit dem Pluspol der Energieversorgungseinrichtung (1) sowie der Kommunikationsschnittstelle (113) mittels einer Kommunikationsleitung mit dem Steuergerät (15).

11. Herstellungsverfahren gemäß einem der vorangegangenen Ansprüche, wobei im Schritt des Bereitstellens (S2) des Schnittstellenmoduls (22) dieses eine Masseschnittstelle zum Koppeln mit einem Minuspol der Energieversorgungseinrichtung (1) aufweist und wobei im Schritt des Zuführen (S3) eine Masseleitung zugeführt wird, wobei der Matrix-Koppler (24, 80, 120) eingerichtet ist, die Masseschnittstelle mit zumindest einer, einem Teil oder jeweils mit jeder Last-Schnittstelle (25) der Anzahl von Last-Schnittstellen (25) zu koppeln.

12. Herstellungsverfahren gemäß einem der vorangegangenen Ansprüche, wobei das Schnittstellenmodul (22) einen Gleichspannungswandler (16) aufweist, der eingangsseitig mit der Versorgungsschnittstelle (20) verbunden ist und eingerichtet ist, das an der Versorgungsschnittstelle (20) anliegende erste Spannungsniveau auf ein von dem ersten Spannungsniveau verschiedenes zweites Spannungsniveau zu wandeln und ausgangsseitig das zweite Spannungsniveau dem Matrix-Koppler (24, 80, 120) bereitzustellen, wobei der Matrix-Koppler (24, 80, 120) eingerichtet ist, das erste Spannungsniveau und/oder das zweite Spannungsniveau Schnittstellen-individuell der Anzahl von Last-Schnittstellen (25) bereitzustellen.

13. Herstellungsverfahren gemäß dem vorangegangenen Anspruch, wobei das erste Spannungsniveau höher als das zweite Spannungsniveau ist, bevorzugt das erste Spannungsniveau 48 V und das zweite Spannungsniveau 12 V beträgt.

14. Herstellungsverfahren gemäß einem der vorangegangenen Ansprüche, bei dem das Schnittstellenmodul (22) elektronische Sicherungen aufweist, bevorzugt dass der Matrix-Koppler (24, 80, 120) elektronische Sicherungen aufweist.

15. Fahrzeugbordnetz (BN) für ein Fahrzeug (500), umfassend:
a. eine Mehrzahl von Bordnetzteilnehmern (3, 4, 5, 6, 7, 8, 9; 114, 115, 116, 117, 118;125, 126, 127, 128, 129) in mindestens zwei räumlich oder funktionsseitig zu unterscheidenden Topologieebenen (TE1, TE2),
b. eine Energieversorgungseinrichtung (1),
c. zumindest ein Steuergerät (15; 110, 111, 112),
d. zumindest ein Schnittstellenmodul (22) für das Fahrzeugbordnetz (BN), umfassend:
i. eine Versorgungsschnittstelle (20) zum Koppeln mit einem Pluspol der Energieversorgungseinrichtung (1) des Fahrzeugs (500),
ii. eine Kommunikationsschnittstelle (113) zum Empfangen und/oder Senden von Informationen von einem gekoppelten oder koppelbaren Steuergerät (15; 110, 111, 112) des Fahrzeugs (500),
iii. eine Anzahl von Last-Schnittstellen (25), wobei jeweils einem Bordnetzteilnehmer (3, 4, 5, 6, 7, 8, 9; 114, 115, 116, 117, 118;125, 126, 127, 128, 129) der Mehrzahl von Bordnetzteilnehmern (3, 4, 5, 6, 7, 8, 9; 114, 115, 116, 117, 118;125, 126, 127, 128, 129) zumindest eine Last-Schnittstelle (25) der Anzahl von Last-Schnittstellen (25) zugeordnet ist,
iv. zumindest einen Matrix-Koppler (24, 80, 120), der ausgebildet ist, die Versorgungsschnittstelle (20) sowie die Kommunikationsschnittstelle (113) jeweils mit jeder Last-Schnittstelle (25) der Anzahl von Last-Schnittstellen (25) zu koppeln und so eine Schnittstelle zwischen den zumindest zwei zu unterscheidenden Topologieebenen (TE1, TE2) darzustellen,
- wobei der Matrix-Koppler (24, 80, 120) eingerichtet ist, eine Entflechtungsaufgabe für eine Verknüpfung der Bordnetzteilnehmer (3, 4, 5, 6, 7, 8, 9; 114, 115, 116, 117, 118;125, 126, 127, 128, 129) darzustellen,
- wobei Knoten eines Leitung-Stecker-Beziehungen des Matrix-Kopplers (24, 80, 120) repräsentierenden Graphen jeweils eine Last-Schnittstelle (25) der Anzahl von Last-Schnittstellen (25) am Ende einer Leitung bezeichnen, und
- wobei eine Kante des Graphen eine Verbindungsbeziehung zumindest einer Leitung zwischen einer ersten Last-Schnittstelle (25) und einer zweiten Last-Schnittstelle (25) bezeichnet,
- wobei der Graph zumindest zwei partite Graphen mit zumindest zwei Partitionen (TE1-MK, TE2-MK) umfasst, und
- wobei ein Knoten eines jeden Graphen auf dem Matrix-Koppler (24, 80, 120) liegt,
v. wobei das Schnittstellenmodul (22) eingerichtet ist, eine elektrische Absicherung der Anzahl von Last-Schnittstellen (25) zu den Bordnetzteilnehmern (3, 4, 5, 6, 7, 8, 9; 114, 115, 116, 117, 118;125, 126, 127, 128, 129) vorzunehmen,
e. ein Leitungssatzsegment (100) je Bordnetzteilnehmer (3, 4, 5, 6, 7, 8, 9; 114, 115, 116, 117, 118;125, 126, 127, 128, 129) der Mehrzahl von Bordnetzteilnehmern (3, 4, 5, 6, 7, 8, 9; 114, 115, 116, 117, 118;125, 126, 127, 128, 129), aufweisend zumindest ein erstes Kommunikationsleitungssegment (102), und ein erstes Energieversorgungsleitungssegment (103) je Leitungssatzsegment (100), wobei jeweils ein erstes Ende des ersten Kommunikationsleitungssegments (102) und des ersten Energieversorgungsleitungssegments (103) an einem ersten Ende des zumindest einen Leitungssatzsegments (100) in einem ersten Interface gebündelt sind.

## Claims

1. Method for manufacturing an onboard electrical system (BN) of a vehicle (500), having the following steps:
a. providing (S1)
i. a plurality of onboard electrical system subscribers (3, 4, 5, 6, 7, 8, 9; 114, 115, 116, 117, 118; 125, 126, 127, 128, 129) in at least two spatially or functionally topology planes (TE1, TE2) to be distinguished,
ii. a power supply device (1), and
iii. at least one control unit (15);
b. providing (S2) an interface module (22) for the onboard electrical system (BN), comprising:
i. a supply interface (20) for coupling to a positive pole of the power supply device (1) of the vehicle,
ii. a communication interface (113) for receiving and/or sending information from a coupled or couplable control unit (15; 110, 111, 112) of the vehicle (500),
iii. a number of load interfaces (25), a respective onboard electrical system subscriber (3, 4, 5, 6, 7, 8, 9; 114, 115, 116, 117, 118; 125, 126, 127, 128, 129) from the plurality of onboard electrical system subscribers (3, 4, 5, 6, 7, 8, 9; 114, 115, 116, 117, 118; 125, 126, 127, 128, 129) having at least one associated load interface (25) from the number of load interfaces (25),
iv. at least one matrix coupler (24, 80, 120), which is designed to couple both the supply interface (20) and the communication interface (113) to each load interface (25) from the number of load interfaces (25) and thus to be an interface between the at least two topology planes (TE1, TE2) to be distinguished, and the matrix coupler (24, 80, 120) is also designed to couple the number of load interfaces (25) to one another,
- wherein the matrix coupler (24, 80, 120) is configured to perform a disentanglement task for an interconnection of the onboard electrical system subscribers (3, 4, 5, 6, 7, 8, 9; 114, 115, 116, 117, 118; 125, 126, 127, 128, 129),
- wherein nodes of a graph representing line/plug connector relationships of the matrix coupler (24, 80, 120) denote a respective load interface (25) from the number of load interfaces (25) at the end of a line, and
- wherein an edge of the graph denotes a connection relationship of at least one line between a first load interface (25) and a second load interface (25),
- wherein the graph comprises at least two partite graphs having at least two partitions (TE1-MK, TE2-MK), and
- wherein a node of each graph lies on the matrix coupler (24, 80, 120),
v. wherein the interface module (22) is configured to electrically protect the number of load interfaces (25) for the onboard electrical system subscribers (3, 4, 5, 6, 7, 8, 9; 114, 115, 116, 117, 118; 125, 126, 127, 128, 129),
c. adding (S3) a first wiring harness segment (100), having at least one first communication line segment (102), and a first power supply line segment (103), wherein first ends of the first communication line segment (102) and the first power supply line segment (103) are bundled in a first interface at a first end of the at least one wiring harness segment (100);
d. coupling (S4) a second end of the first wiring harness segment (100), which is opposite the first end, to a first load interface (25) from the number of load interfaces (25); and
e. repeating the adding (S3) and coupling (S4) steps for each onboard electrical system subscriber (3, 4, 5, 6, 7, 8, 9; 114, 115, 116, 117, 118; 125, 126, 127, 128, 129) from the plurality of onboard electrical system subscribers (3, 4, 5, 6, 7, 8, 9; 114, 115, 116, 117, 118; 125, 126, 127, 128, 129), in order to manufacture an onboard electrical system (BN) that can be produced in automated fashion with disentanglement within the matrix coupler (24, 80, 120).

2. Manufacturing method according to Claim 1, having a step of assembling the wiring harness segment (100) before the step of adding (S3) the wiring harness segment (100), wherein, for each onboard electrical system subscriber (3, 4, 5, 6, 7, 8, 9; 114, 115, 116, 117, 118; 125, 126, 127, 128, 129) from the plurality of onboard electrical system subscribers (3, 4, 5, 6, 7, 8, 9; 114, 115, 116, 117, 118; 125, 126, 127, 128, 129), a wiring harness segment (100) is assembled that comprises a communication line segment (102) and a power supply line segment (103) of the same length, and wherein first ends of the communication line segment (102) and the power supply line segment (103) are bundled in an associated interface at a first end of the wiring harness segment (100).

3. Manufacturing method according to either of the preceding claims, in which the graph comprises two bipartite graphs having two bipartitions (TE1-MK, TE2-MK) .

4. Manufacturing method according to the preceding claim, in which the respective eigenvector of a respective adjacency matrix of the two bipartitions (TE1-MK, TE2-MK) is symmetrical in relation to zero, and wherein a node of each graph lies on the matrix coupler (24, 80, 120).

5. Manufacturing method according to one of the preceding claims, in which the interface module (22) has electronic fuses, preferably in that the matrix coupler (24, 80, 120) has electronic fuses, which are configured to electrically protect the number of load interfaces (25) for the onboard electrical system subscribers (3, 4, 5, 6, 7, 8, 9; 114, 115, 116, 117, 118; 125, 126, 127, 128, 129).

6. Manufacturing method according to one of the preceding claims, wherein the electrical protection for the load interfaces (25) and hence for the wiring harness segments (100) for the onboard electrical system subscribers (3, 4, 5, 6, 7, 8, 9; 114, 115, 116, 117, 118; 125, 126, 127, 128, 129) is provided electronically using MOSFET switches and intelligent protection characteristics and/or using fusible links.

7. Manufacturing method according to one of the preceding claims, wherein the interface module (22) is configured to provide a control function and/or a sensor evaluation for one onboard electrical system subscriber (3, 4, 5, 6, 7, 8, 9; 114, 115, 116, 117, 118; 125, 126, 127, 128, 129), multiple onboard electrical system subscribers (3, 4, 5, 6, 7, 8, 9; 114, 115, 116, 117, 118; 125, 126, 127, 128, 129) or all onboard electrical system subscribers (3, 4, 5, 6, 7, 8, 9; 114, 115, 116, 117, 118; 125, 126, 127, 128, 129) from the connected plurality of onboard electrical system subscribers (3, 4, 5, 6, 7, 8, 9; 114, 115, 116, 117, 118; 125, 126, 127, 128, 129).

8. Manufacturing method according to one of the preceding claims, wherein each of the number of load interfaces (25) is in the form of a plug connector or socket or transfer support point or splice.

9. Manufacturing method according to one of the preceding claims, wherein the communication line segment (102) is shaped as a film conductor.

10. Manufacturing method according to one of the preceding claims, having a step of coupling the supply interface (20) of the interface module (22) to the positive pole of the power supply device (1) by means of a power supply line and of coupling the communication interface (113) to the control unit (15) by means of a communication line.

11. Manufacturing method according to one of the preceding claims, wherein in the step of providing (S2) the interface module (22), said interface module has an earth interface for coupling to a negative pole of the power supply device (1), and wherein the adding (S3) step comprises adding an earth line, the matrix coupler (24, 80, 120) being configured to couple the earth interface to at least one, some or each respective load interface (25) from the number of load interfaces (25).

12. Manufacturing method according to one of the preceding claims, wherein the interface module (22) has a DC-DC voltage converter (16), the input side of which is connected to the supply interface (20) and which is configured to convert the first voltage level present on the supply interface (20) to a second voltage level, which is different from the first voltage level, and to provide the second voltage level to the matrix coupler (24, 80, 120) on the output side, the matrix coupler (24, 80, 120) being configured to provide the first voltage level and/or the second voltage level to the number of load interfaces (25) on an interfaceindividual basis.

13. Manufacturing method according to the preceding claim, wherein the first voltage level is higher than the second voltage level, preferably the first voltage level is 48 V and the second voltage level is 12 V.

14. Manufacturing method according to one of the preceding claims, in which the interface module (22) has electronic fuses, preferably in that the matrix coupler (24, 80, 120) has electronic fuses.

15. Onboard electrical system (BN) for a vehicle (500), comprising:
a. a plurality of onboard electrical system subscribers (3, 4, 5, 6, 7, 8, 9; 114, 115, 116, 117, 118; 125, 126, 127, 128, 129) in at least two spatially or functionally topology planes (TE1, TE2) to be distinguished,
b. a power supply device (1),
c. at least one control unit (15; 110, 111, 112),
d. at least one interface module (22) for the onboard electrical system (BN), comprising:
i. a supply interface (20) for coupling to a positive pole of the power supply device (1) of the vehicle (500),
ii. a communication interface (113) for receiving and/or sending information from a coupled or couplable control unit (15; 110, 111, 112) of the vehicle (500),
iii. a number of load interfaces (25), a respective onboard electrical system subscriber (3, 4, 5, 6, 7, 8, 9; 114, 115, 116, 117, 118; 125, 126, 127, 128, 129) from the plurality of onboard electrical system subscribers (3, 4, 5, 6, 7, 8, 9; 114, 115, 116, 117, 118; 125, 126, 127, 128, 129) having at least one associated load interface (25) from the number of load interfaces (25),
iv. at least one matrix coupler (24, 80, 120), which is designed to couple both the supply interface (20) and the communication interface (113) to each load interface (25) from the number of load interfaces (25) and thus to be an interface between the at least two topology planes (TE1, TE2) to be distinguished,
- wherein the matrix coupler (24, 80, 120) is configured to perform a disentanglement task for an interconnection of the onboard electrical system subscribers (3, 4, 5, 6, 7, 8, 9; 114, 115, 116, 117, 118; 125, 126, 127, 128, 129),
- wherein nodes of a graph representing line/plug connector relationships of the matrix coupler (24, 80, 120) denote a respective load interface (25) from the number of load interfaces (25) at the end of a line, and
- wherein an edge of the graph denotes a connection relationship of at least one line between a first load interface (25) and a second load interface (25),
- wherein the graph comprises at least two partite graphs having at least two partitions (TE1-MK, TE2-MK), and
- wherein a node of each graph lies on the matrix coupler (24, 80, 120),
v. wherein the interface module (22) is configured to electrically protect the number of load interfaces (25) for the onboard electrical system subscribers (3, 4, 5, 6, 7, 8, 9; 114, 115, 116, 117, 118; 125, 126, 127, 128, 129),
e. one wiring harness segment (100) for each onboard electrical system subscriber (3, 4, 5, 6, 7, 8, 9; 114, 115, 116, 117, 118; 125, 126, 127, 128, 129) from the plurality of onboard electrical system subscribers (3, 4, 5, 6, 7, 8, 9; 114, 115, 116, 117, 118; 125, 126, 127, 128, 129), having at least one first communication line segment (102), and a first power supply line segment (103) for each wiring harness segment (100), wherein first ends of the first communication line segment (102) and the first power supply line segment (103) are bundled in a first interface at a first end of the at least one wiring harness segment (100).

## Revendications

1. Procédé de fabrication d'un réseau de bord de véhicule (BN) d'un véhicule (500), ledit procédé comprenant les étapes suivantes :
a. fournir (S1)
i. une pluralité de périphériques de réseau de bord (3, 4, 5, 6, 7, 8, 9 ; 114, 115, 116, 117, 118 ; 125, 126, 127, 128, 129) sur au moins deux niveaux de topologie (TE1, TE2) à distinguer spatialement ou fonctionnellement,
ii.un dispositif d'alimentation en énergie (1), et
iii. au moins une unité de commande (15) ;
b. fournir (S2) un module d'interface (22) destiné au réseau de bord de véhicule (BN), ledit module comprenant :
i. une interface d'alimentation (20) destinée à se raccorder à un pôle plus du dispositif d'alimentation en énergie (1) du véhicule,
ii.une interface de communication (113) destinée à recevoir et/ou envoyer des informations provenant d'une unité de commande raccordée ou raccordable (15 ; 110, 111, 112) du véhicule (500),
iii. un certain nombre d'interfaces de charge (25), au moins une interface de charge (25) du nombre d'interfaces de charge (25) étant associée respectivement à un périphérique de réseau de bord (3, 4, 5, 6, 7, 8, 9 ; 114, 115, 116, 117, 118 ; 125, 126, 127, 128, 129) de la pluralité de périphériques de réseau de bord (3, 4, 5, 6, 7, 8, 9 ; 114, 115, 116, 117, 118 ; 125, 126, 127, 128, 129),
iv.au moins un coupleur matriciel (24, 80, 120) qui est conçu pour raccorder l'interface d'alimentation (20) et l'interface de communication (113) à chaque interface de charge (25) du nombre d'interfaces de charge (25) et donc pour représenter une interface entre les au moins deux niveaux de topologie (TE1, TE2) à distinguer, et le coupleur matriciel (24, 80, 120) étant en outre conçu pour raccorder le nombre d'interfaces de charge (25) entre elles,
- le coupleur matriciel (24, 80, 120) étant conçu pour représenter une tâche de dégroupage destinée à combiner les périphériques de réseau de bord (3, 4, 5, 6, 7, 8, 9 ; 114, 115, 116, 117, 118 ; 125, 126, 127, 128, 129),
- des nœuds d'un graphe représentant des relations ligne-connecteur du coupleur matriciel (24, 80, 120) désignant chacun une interface de charge (25) du nombre d'interfaces de charge (25) en bout de ligne, et
- un côté du graphe désignant une relation de liaison d'au moins une ligne entre une première interface de charge (25) et une deuxième interface de charge (25),
- le graphe comprenant au moins deux graphes partitionnés pourvus d'au moins deux partitions (TE1-MK, TE2-MK), et
- un nœud de chaque graphe étant situé sur le coupleur matriciel (24, 80, 120),
v. le module d'interface (22) étant conçu pour effectuer une protection électrique du nombre d'interfaces de charge (25) par rapport aux périphériques de réseau de bord (3, 4, 5, 6, 7, 8, 9 ; 114, 115, 116, 117, 118 ; 125, 126, 127, 128, 129),
c. amener (S3) un premier segment d'ensemble de lignes (100), comportant au moins un premier segment de ligne de communication (102) et un premier segment de ligne d'alimentation en énergie (103), une première extrémité du premier segment de ligne de communication (102) et une première extrémité du premier segment de ligne d'alimentation (103) étant regroupées à une première extrémité de l'au moins un segment d'ensemble de lignes (100) dans une première interface ;
d. raccorder (S4) une deuxième extrémité du premier segment d'ensemble de lignes (100), qui est opposée à la première extrémité, à une première interface de charge (25) du nombre d'interfaces de charge (25) ; et
e. répéter les étapes d'amenée (S3) et de raccordement (S4) pour chaque périphérique de réseau de bord (3, 4, 5, 6, 7, 8, 9 ; 114, 115, 116, 117, 118 ; 125, 126, 127, 128, 129) de la pluralité de périphériques de réseau de bord (3, 4, 5, 6, 7, 8, 9 ; 114, 115, 116, 117, 118 ; 125, 126, 127, 128, 129) afin de réaliser un réseau de bord de véhicule (BN), pouvant être fabriqué automatiquement, qui comporte un dégroupage à l'intérieur du coupleur matriciel (24, 80, 120) .

2. Procédé de fabrication selon la revendication 1, comprenant une étape de confection du segment d'ensemble de lignes (100) avant l'étape d'amenée (S3) du segment d'ensemble de lignes (100), un segment d'ensemble de lignes (100), qui comprend un segment de ligne de communication (102) et un segment de ligne d'alimentation en énergie (103) de même longueur, étant confectionné pour chaque périphérique de réseau de bord (3, 4, 5, 6, 7, 8, 9 ; 114, 115, 116, 117, 118 ; 125, 126, 127, 128, 129) de la pluralité de périphériques de réseau de bord du véhicule (3, 4, 5, 6, 7, 8, 9 ; 114, 115, 116, 117, 118 ; 125, 126, 127, 128, 129) et une première extrémité du segment de ligne de communication (102) et une première extrémité du segment de ligne d'alimentation en énergie (103) étant regroupées à une première extrémité du segment d'ensemble de lignes (100) dans une interface associée.

3. Procédé de fabrication selon l'une des revendications précédentes, dans lequel le graphe comprend deux graphes bi-partitionnés pourvus de deux bipartitions (TE1-MK, TE2-MK).

4. Procédé de fabrication selon la revendication précédente, dans lequel le vecteur propre d'une matrice d'adjacence respective des deux bipartitions (TE1-MK, TE2-MK) est symétrique par rapport à zéro, et un nœud de chaque graphe étant situé sur le coupleur matriciel (24, 80, 120).

5. Procédé de fabrication selon l'une des revendications précédentes, dans lequel le module d'interface (22) comporte des protections électroniques, de préférence le coupleur matriciel (24, 80, 120) comporte des protections électroniques qui sont conçues pour effectuer une protection électrique du nombre d'interfaces de charge (25) par rapport aux périphériques de réseau de bord (3, 4, 5, 6, 7, 8, 9 ; 114, 115, 116, 117, 118 ; 125, 126, 127, 128, 129).

6. Procédé de fabrication selon l'une des revendications précédentes, dans lequel la protection électrique des interfaces de charge (25) et donc des segments d'ensemble de lignes (100) par rapport aux périphériques de réseau de bord (3, 4, 5, 6, 7, 8, 9 ; 114, 115, 116, 117, 118 ; 125, 126, 127, 128, 129) est effectuée électroniquement à l'aide de commutateurs Mosfet et de caractéristiques de protection intelligentes et/ou de protections fusibles.

7. Procédé de fabrication selon l'une des revendications précédentes, le module d'interface (22) étant conçu pour fournir une fonction de commande et/ou une évaluation de capteur à un périphérique de réseau de bord (3, 4, 5, 6, 7, 8, 9 ; 114, 115, 116, 117, 118 ; 125, 126, 127, 128, 129), plusieurs périphériques de réseau de bord (3, 4, 5, 6, 7, 8, 9 ; 114, 115, 116, 117, 118 ; 125, 126, 127, 128, 129) ou tous les périphériques de réseau de bord (3, 4, 5, 6, 7, 8, 9 ; 114, 115, 116, 117, 118 ; 125, 126, 127, 128, 129) de la pluralité raccordée de périphériques de réseau de bord (3, 4, 5, 6, 7, 8, 9 ; 114, 115, 116, 117, 118 ; 125, 126, 127, 128, 129).

8. Procédé de fabrication selon l'une des revendications précédentes, le nombre d'interfaces de charge (25) étant conçues chacune sous la forme d'un connecteur mâle ou d'un connecteur femelle ou d'un point de reprise de transfert ou d'une épissure.

9. Procédé de fabrication selon l'une des revendications précédentes, le segment de ligne de communication (102) étant conformé comme un conducteur en nappe.

10. Procédé de fabrication selon l'une des revendications précédentes, comprenant une étape de raccordement de l'interface d'alimentation (20) du module d'interface (22) au pôle plus du dispositif d'alimentation en énergie (1) au moyen d'une ligne d'alimentation en énergie et de l'interface de communication (113) à l'unité de commande (15) au moyen d'une ligne de communication.

11. Procédé de fabrication selon l'une des revendications précédentes, à l'étape de fourniture (S2) du module d'interface (22), celui-ci comportant une interface de masse destinée à être raccordée à un pôle moins du dispositif d'alimentation en énergie (1) et une ligne de masse étant amenée à l'étape d'amenée (S3), le coupleur matriciel (24, 80, 120) étant conçu pour raccorder l'interface de masse à au moins une interface de charge, une partie ou chaque interface de charge (25) du nombre d'interfaces de charge (25).

12. Procédé de fabrication selon l'une des revendications précédentes, le module d'interface (22) comportant un convertisseur de tension continue (16) qui est relié côté entrée à l'interface d'alimentation (20) et qui est conçu pour convertir le premier niveau de tension, présent à l'interface d'alimentation (20), en un deuxième niveau de tension, différent du premier niveau de tension, et pour fournir côté sortie le deuxième niveau de tension au coupleur matriciel (24, 80, 120), le coupleur matriciel (24, 80, 120) étant conçu pour fournir le premier niveau de tension et/ou le deuxième niveau de tension individuellement en termes d'interfaces au nombre d'interfaces de charge (25) .

13. Procédé de fabrication selon la revendication précédente, le premier niveau de tension étant supérieur au deuxième niveau de tension, de préférence le premier niveau de tension étant de 48 V et le deuxième niveau de tension étant de 12 V.

14. Procédé de fabrication selon l'une des revendications précédentes, dans lequel le module d'interface (22) comporte des protections électroniques, de préférence le coupleur matriciel (24, 80, 120) comporte des protections électroniques.

15. Réseau de bord de véhicule (BN) destiné à un véhicule (500), ledit réseau de bord comprenant :
a. une pluralité de périphériques de réseau de bord (3, 4, 5, 6, 7, 8, 9 ; 114, 115, 116, 117, 118 ; 125, 126, 127, 128, 129) sur au moins deux niveaux de topologie (TE1, TE2) à distinguer spatialement ou fonctionnellement,
b. un dispositif d'alimentation en énergie (1),
c. au moins une unité de commande (15 ; 110, 111, 112),
d. au moins un module d'interface (22) destiné au réseau de bord de véhicule (BN), ledit module comprenant :
i. une interface d'alimentation (20) destinée à se raccorder à un pôle plus du dispositif d'alimentation en énergie (1) du véhicule (500),
ii.une interface de communication (113) destinée à recevoir et/ou envoyer des informations provenant d'une unité de commande raccordée ou raccordable (15 ; 110, 111, 112) du véhicule (500),
iii. un certain nombre d'interfaces de charge (25), au moins une interface de charge (25) du nombre d'interfaces de charge (25) étant associée respectivement à un périphérique de réseau de bord (3, 4, 5, 6, 7, 8, 9 ; 114, 115, 116, 117, 118 ; 125, 126, 127, 128, 129) de la pluralité de périphériques de réseau de bord (3, 4, 5, 6, 7, 8, 9 ; 114, 115, 116, 117, 118 ; 125, 126, 127, 128, 129),
iv.au moins un coupleur matriciel (24, 80, 120) qui est conçu pour raccorder l'interface d'alimentation (20) et l'interface de communication (113) à chaque interface de charge (25) du nombre d'interfaces de charge (25) et donc pour représenter une interface entre les au moins deux niveaux de topologie (TE1, TE2) à distinguer,
- le coupleur matriciel (24, 80, 120) étant conçu pour représenter une tâche de dégroupage destinée à combiner les périphériques de réseau de bord (3, 4, 5, 6, 7, 8, 9 ; 114, 115, 116, 117, 118 ; 125, 126, 127, 128, 129),
- des nœuds d'un graphe représentant des relations ligne-connecteur du coupleur matriciel (24, 80, 120) désignant chacun une interface de charge (25) du nombre d'interfaces de charge (25) en bout de ligne, et
- un côté du graphe désignant une relation de liaison d'au moins une ligne entre une première interface de charge (25) et une deuxième interface de charge (25),
- le graphe comprenant au moins deux graphes partitionnés pourvus d'au moins deux partitions (TE1-MK, TE2-MK), et
- un nœud de chaque graphe étant situé sur le coupleur matriciel (24, 80, 120),
v. le module d'interface (22) étant conçu pour effectuer une protection électrique du nombre d'interfaces de charge (25) par rapport aux périphériques de réseau de bord (3, 4, 5, 6, 7, 8, 9 ; 114, 115, 116, 117, 118 ; 125, 126, 127, 128, 129),
e. un segment d'ensemble de lignes (100) pour chaque périphérique de réseau de bord (3, 4, 5, 6, 7, 8, 9 ; 114, 115, 116, 117, 118 ; 125, 126, 127, 128, 129) de la pluralité de périphériques de réseau de bord (3, 4, 5, 6, 7, 8, 9 ; 114, 115, 116, 117, 118 ; 125, 126, 127, 128, 129), comportant au moins un premier segment de ligne de communication (102), et un premier segment de ligne d'alimentation en énergie (103) par segment d'ensemble de lignes (100), une première extrémité du premier segment de ligne de communication (102) et une première extrémité du premier segment de ligne d'alimentation en énergie (103) étant regroupées à une première extrémité de l'au moins un segment d'ensemble de lignes (100) dans une première interface.
